# EUROPEAN PATENT APPLICATION

(11) **EP 4 645 919 A1**
(43) Date of publication of application: **05.11.2025**
(21) Application number: 23912142.9
(22) Date of filing: 26.12.2023
(51) Int. Cl.: H04W 4/70, H04W 72/04, H04W 72/51, H04W 92/18

(54) **COMMUNICATION SYSTEM**

(30) Priority: 27.12.2022 JP 2022210660
(71) Applicant: MITSUBISHI ELECTRIC CORPORATION, Chiyoda-ku Tokyo 100-8310 (JP)
(72) Inventor: MOCHIZUKI, Mitsuru, Tokyo 100-8310 (JP); SHIMODA, Tadahiro, Tokyo 100-8310 (JP)
(74) Representative: Mewburn Ellis LLP
(86) International application number: PCT/JP2023/046669
(87) International publication number: WO 2024/143363

(57) **Abstract**

A communication system for enabling communication with an IoT device having ultra-low power consumption includes a base station supporting a fifth generation radio access system, a communication terminal configured to connect to the base station, and a device configured to connect to the base station or the communication terminal, in which first communication and second communication coexist in the communication system by using at least one of frequency division multiplexing and time division multiplexing, the first communication being communication between the device and the base station or communication between the device and the communication terminal, and the second communication being communication between the communication terminal and the base station and communication between the communication terminals.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). The NR system has been studied, based on the LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

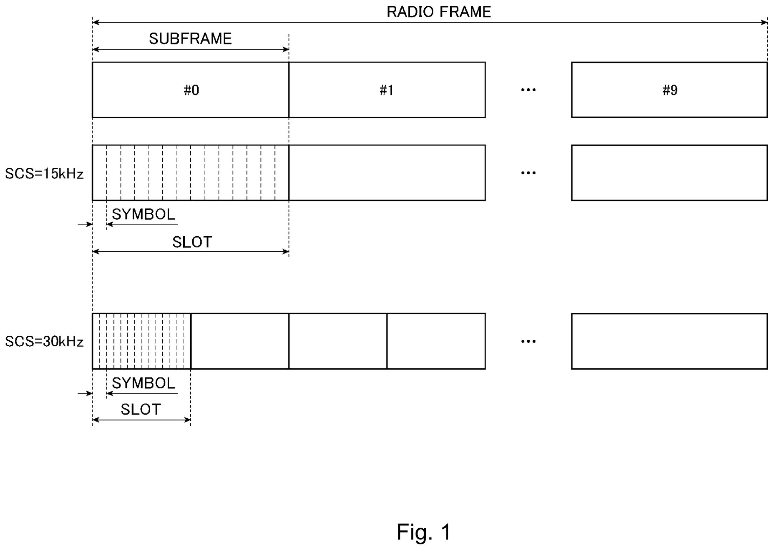

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, that is, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with predetermined periodicity for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described later, resource allocation information of a paging channel (PCH) being one of transport channels to be described later, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described later. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, that is, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, that is, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, that is, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described later is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides Non-Access Stratum (NAS) mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (SL) communication (also referred to as PC5 communication) both in an Evolved Packet System (EPS) and a 5G core system to be described later is studied (see NPLs 1, 2, and 26 to 28). In SL communication, communication is performed between the terminals. Examples of the services using SL communication include a vehicle-to-everything (V2X) service, a proximity-based service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmit power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

Some new technologies are required for the mobile communication system. For example, new technologies are required to introduce, into the mobile communication system, Internet of Things (IoT) devices having ultra-low power consumption, such as battery-less devices and devices that do not require replacement or charging and are capable of communication only with an energy storing function. In 3GPP, discussion on such new technologies has begun (NPLs 30, 31, 32, and 33).

### Citation List

### Non Patent Literature

[NPL 1] 3GPP TS 36.300 V17.2.0
[NPL 2] 3GPP TS 38.300 V17.2.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V17.6.0
[NPL 11] 3GPP TS 38.211 V17.3.0
[NPL 12] 3GPP TS 38.212 V17.3.0
[NPL 13] 3GPP TS 38.213 V17.3.0
[NPL 14] 3GPP TS 38.214 V17.3.0
[NPL 15] 3GPP TS 38.321 V17.2.0
[NPL 16] 3GPP TS 38.322 V17.1.0
[NPL 17] 3GPP TS 38.323 V17.2.0
[NPL 18] 3GPP TS 37.324 V17.0.0
[NPL 19] 3GPP TS 38.331 V17.2.0
[NPL 20] 3GPP TS 38.401 V17.2.0
[NPL 21] 3GPP TS 38.413 V17.2.0
[NPL 22] 3GPP TS 37.340 V17.2.0
[NPL 23] 3GPP TS 38.423 V17.2.0
[NPL 24] 3GPP TS 38.305 V17.2.0
[NPL 25] 3GPP TS 23.273 V17.6.0
[NPL 26] 3GPP TR 23.703 V12.0.0
[NPL 27] 3GPP TS 23.287 V17.4.0
[NPL 28] 3GPP TS 23.303 V17.0.0
[NPL 29] 3GPP TS 38.340 V17.2.0
[NPL 30] 3GPP RP-222685
[NPL 31] 3GPP RP-222335
[NPL 32] 3GPP RP-222126
[NPL 33] 3GPP RP-222069
[NPL 34] 3GPP RP-222440
[NPL 35] 3GPP TS-38.101-1 V17.6.0
[NPL 36] 3GPP TS-38.101-2 V17.7.0
[NPL 37] 3GPP TS 37.320 V17.1.0
[NPL 38] 3GPP TS 32.422 V17.8.0

### SUMMARY

### Technical Problem

In the mobile communication system, communication for various services is performed, and thus it is assumed that an enormous number of IoT devices such as wearable terminals and sensors are to be used in the future. Thus, IoT devices having ultra-low power consumption, such as battery-less devices and devices that do not require replacement or charging and are capable of communication only with an energy storing function, are required to be used. New technologies for introducing such IoT devices having ultra-low power consumption into the mobile communication system are required. In 3GPP, discussion on the new technologies has begun (NPLs 30, 31, 32, and 33). However, no disclosures have been made on a specific method for introducing such IoT devices having ultra-low power consumption into the mobile communication system. For example, resources for performing communication with an IoT device having ultra-low power consumption, a method of communication between an IoT device and a UE or a gNB, and the like have not been disclosed, and accordingly the IoT devices having ultra-low power consumption cannot be introduced into the mobile communication system and communication cannot be performed.

In view of the problem, the present disclosure has one object to implement a communication system for enabling communication with an IoT device having ultra-low power consumption.

### Solution to Problem

A communication system includes a base station supporting a fifth generation radio access system, a communication terminal configured to connect to the base station, and a device configured to connect to the base station or the communication terminal. First communication and second communication coexist in the communication system by using at least one of frequency division multiplexing and time division multiplexing, the first communication being communication between the device and the base station or communication between the device and the communication terminal, and the second communication being communication between the communication terminal and the base station and communication between the communication terminal and another communication terminal.

### Advantageous Effects of Invention

According to the present disclosure, a communication system for enabling communication with an IoT device having ultra-low power consumption can be implemented.

The objects, features, aspects and advantages of the present disclosure will become more apparent from the following detailed description and the accompanying drawings.

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a conceptual diagram of a case in which frequency division multiplexing is performed depending on whether or not it is a frequency band defined in 3GPP according to a first embodiment;
Fig. 12 is a conceptual diagram of a case in which frequency division multiplexing is performed depending on whether or not it is a licensed frequency band according to the first embodiment;
Fig. 13 is a conceptual diagram of a case in which frequency division multiplexing is performed within a frequency band defined in 3GPP according to the first embodiment;
Fig. 14 is a conceptual diagram of a case in which a BWP is used as a method of dividing a frequency band according to the first embodiment;
Fig. 15 is a conceptual diagram of a case in which time division multiplexing is performed according to the first embodiment;
Fig. 16 is a conceptual diagram of a case in which frequency division multiplexing and time division multiplexing are combined according to the first embodiment;
Fig. 17 is another conceptual diagram of a case in which frequency division multiplexing and time division multiplexing are combined according to the first embodiment;
Fig. 18 is a diagram illustrating a sequence example of a method of broadcasting a gap configuration according to a second embodiment;
Fig. 19 is a diagram illustrating a sequence example of a gap configuration for UE-device communication according to the second embodiment;
Fig. 20 is a diagram illustrating another sequence example of a gap configuration for UE-device communication according to the second embodiment;
Fig. 21 is a diagram illustrating a sequence example of a gap configuration for device measurement according to a third embodiment;
Fig. 22 is a diagram illustrating a sequence example in which information necessary for UE-device communication is provided to the UE according to a fourth embodiment;
Fig. 23 is a diagram illustrating a sequence example in which the UE performs device-NW communication via the UE in RM-DEREGISTERED according to the fourth embodiment;
Fig. 24 is a diagram illustrating a sequence example in which the UE performs device-NW communication via the UE in CM-IDLE according to the fourth embodiment;
Fig. 25 is a diagram illustrating another sequence example in which the UE performs device-NW communication via the UE in CM-IDLE according to the fourth embodiment;
Fig. 26 is a diagram illustrating a sequence example in which the UE performs device-NW communication via the UE in RRC_INACTIVE according to the fourth embodiment; and
Fig. 27 is a diagram illustrating another sequence example in which the UE performs device-NW communication via the UE in RRC_INACTIVE according to the fourth embodiment.

### DETAILED DESCRIPTION

### First Embodiment

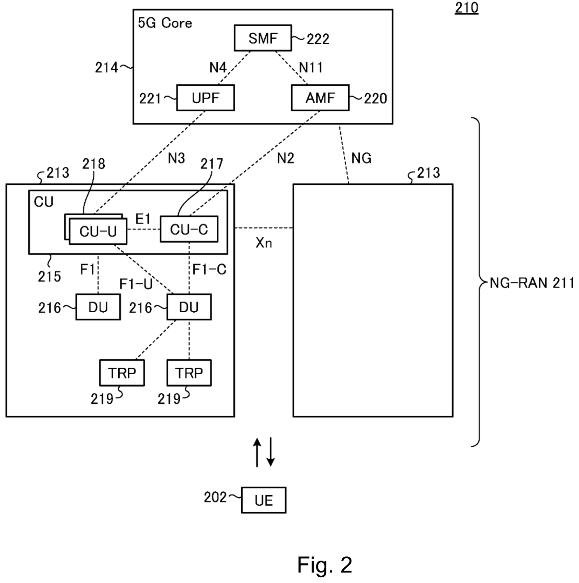

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane, a C-Plane, or a CP), the SDAP is used in a user plane (which may be hereinafter also referred to as a U plane, a U-Plane, or a UP), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC _INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, every single cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

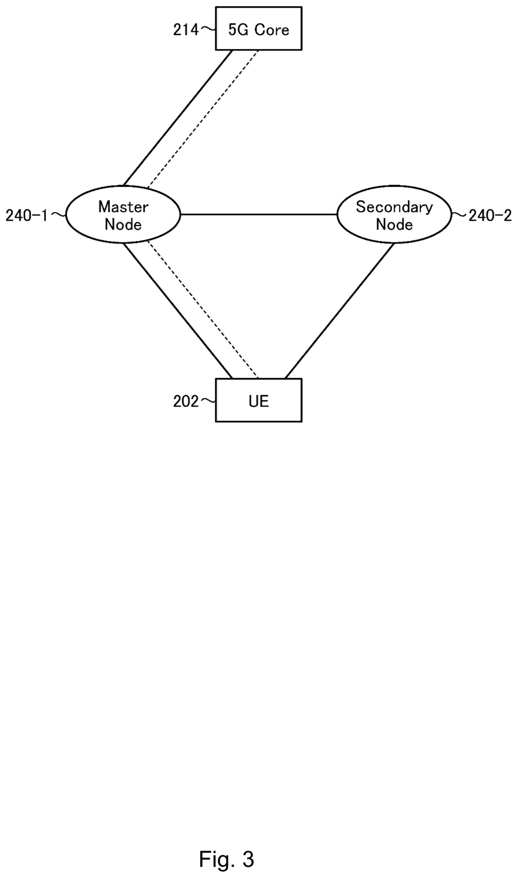

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

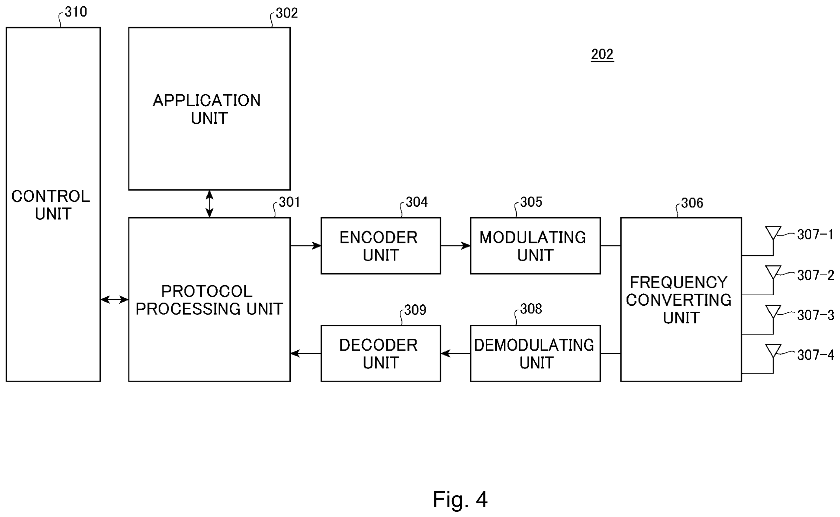

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

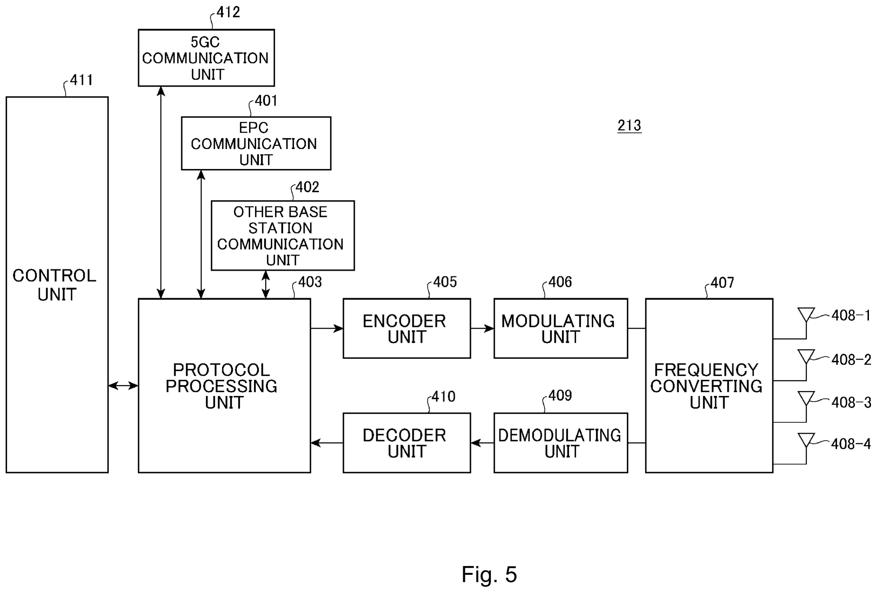

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to a frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

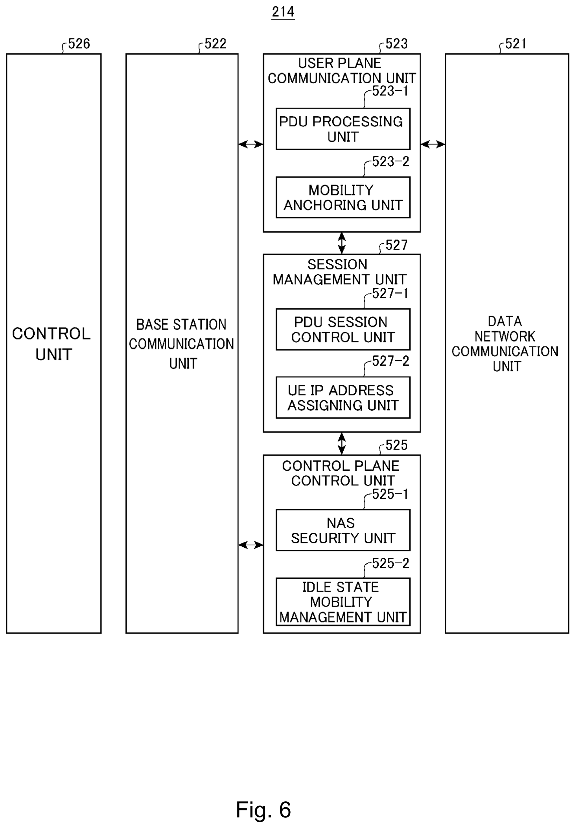

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane control unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

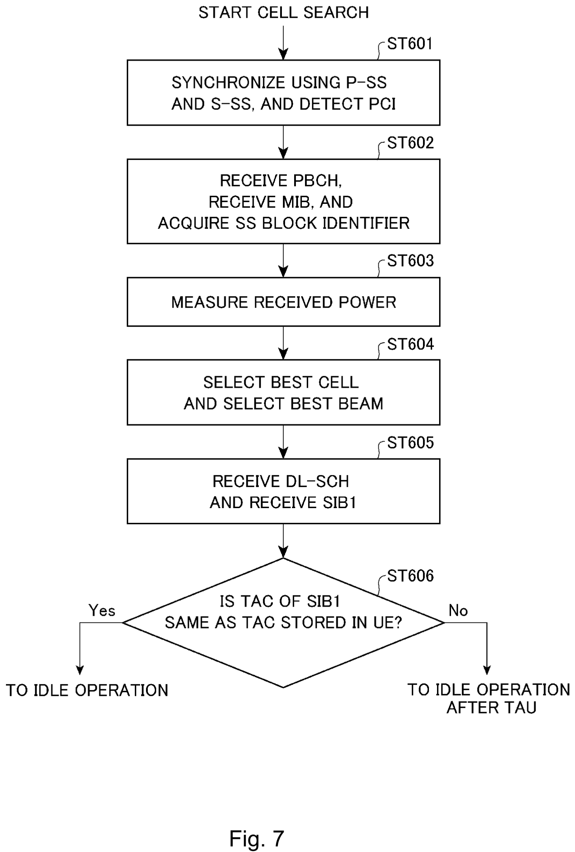

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a surrounding base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, that is, the best cell, out of the one or more cells detected up to Step ST603. The communication terminal selects a beam having the best received quality, for example, a beam having the highest received power of the SS block, that is, the best beam. In selection of the best beam, for example, received power of the SS block of each SS block identifier is used.

Next, in Step ST605, the communication terminal receives a DL-SCH based on the scheduling information of the SIB1 included in the MIB, and obtains the system information block (SIB) 1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB 1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network-side apparatus") updates the tracking area list, based on an identification number (a UE-ID or the like) of the communication terminal transmitted from the communication terminal together with a TAU request signal. The core network-side apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, that is, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

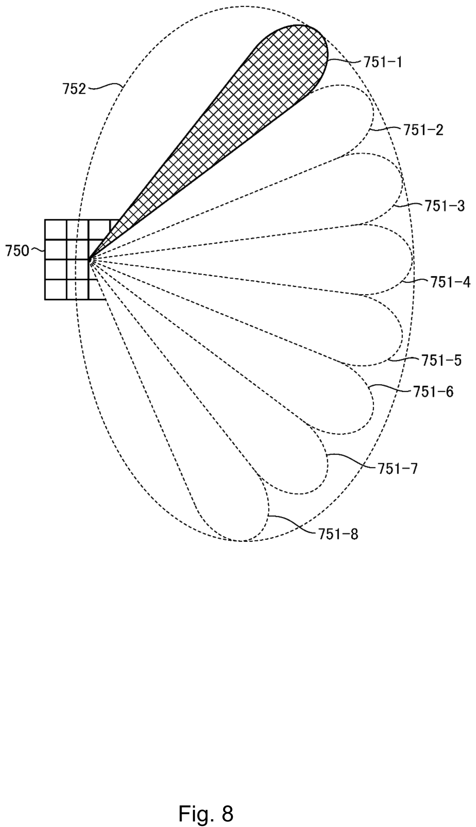

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, that is, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

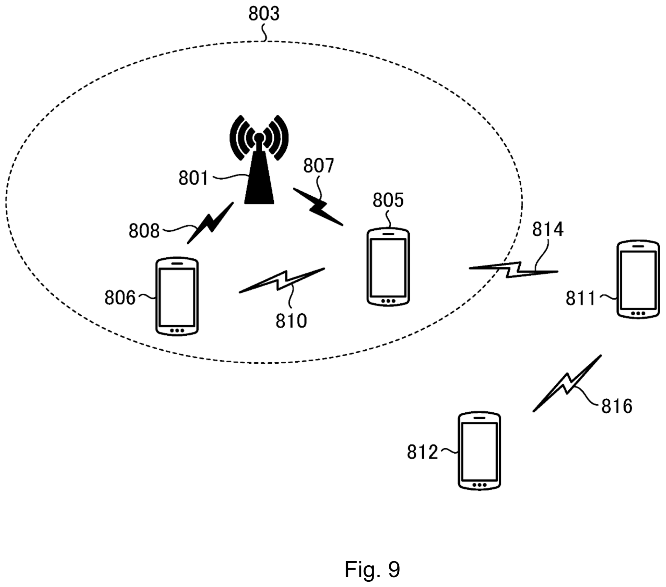

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to the decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

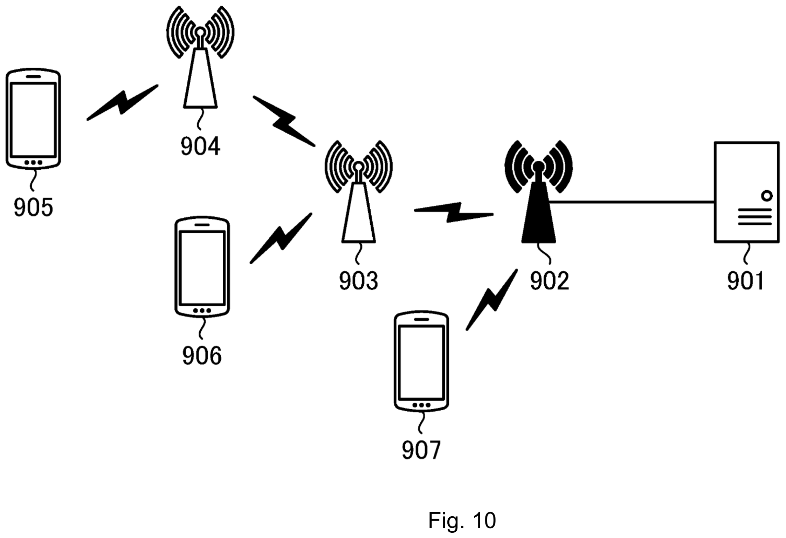

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

In 3GPP, introducing IoT devices having ultra-low power consumption into the mobile communication system has been discussed. It is proposed that an IoT device having ultra-low power consumption performs communication with a UE or a gNB by using a communication method different from a communication method used in air interfaces defined in conventional 3GPP (NPLs 31, 33, and 34). Thus, a method for making communication on an air interface (Uu) between a UE and a gNB and communication on an air interface between a device and a UE or a gNB coexist is required. As interfaces defined in 3GPP, not only the air interface (Uu) between a UE and a gNB but also an air interface (PC5) between a UE and a UE is defined. Thus, a method for making communication on an air interface (PC5) between a UE and a UE and communication on the air interface between a device and a UE or a gNB coexist is also required.

The present embodiment will disclose a method for solving such problems.

To solve the problems, in the present embodiment, communication between an IoT device (which may be hereinafter referred to as a device) having ultra-low power consumption and a UE or a gNB and communication between a UE and a UE or a gNB are subjected to frequency division multiplexing. Note that communication between a device and a UE or communication between a device and a gNB is referred to as first communication, and communication between a UE and a UE or communication between a UE and a gNB is referred to as second communication. The communication between a device and a UE is direct communication between the device and the UE, and the communication between a device and a gNB is direct communication between the device and the gNB. The communication between a UE and a UE is direct communication between the UEs, and the communication between a UE and a gNB is direct communication between the UE and the gNB.

The communication between a device and a UE may be communication between the device and the UE for communication between the device and a NW via the UE.

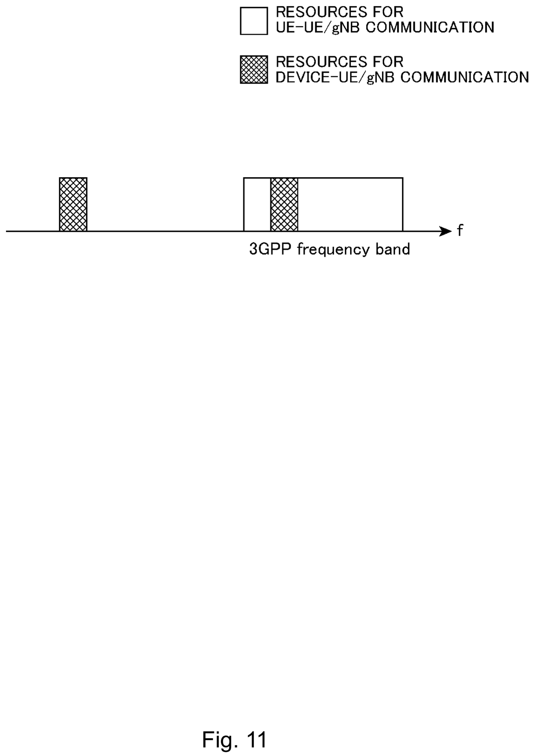

Frequency division multiplexing may be performed depending on whether or not it is a frequency band defined in 3GPP. Communication between a device and a UE or a gNB may be performed outside the frequency band defined in 3GPP. Communication between a UE and a UE or a gNB is performed in the frequency band defined in 3GPP. Fig. 11 is a conceptual diagram of a case in which frequency division multiplexing is performed depending on whether or not it is the frequency band defined in 3GPP. As the outside of the frequency band defined in 3GPP in which communication between a device and a UE or a gNB is performed, there may be an industry science medical (ISM) band. When an existing method is used as a radio communication method between a device and a UE or a gNB, it may be a frequency band defined in the existing method.

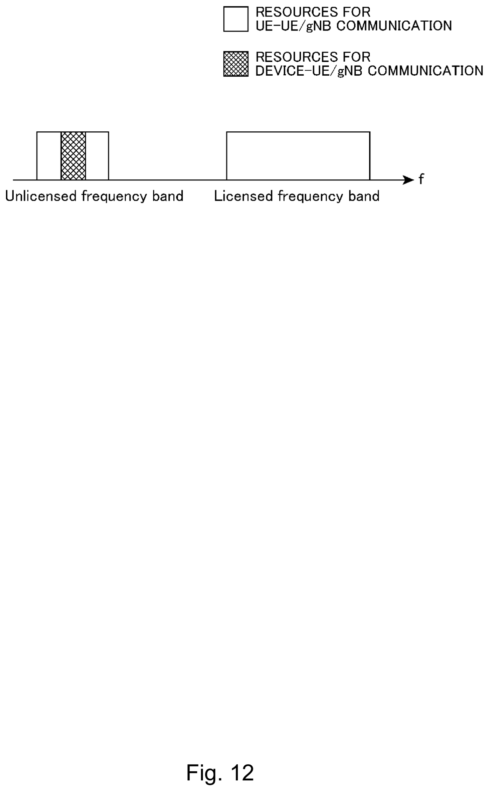

Frequency division multiplexing may be performed depending on whether or not it is a licensed frequency band. Communication between a device and a UE or a gNB may be performed outside the licensed frequency band. Communication between a UE and a UE or a gNB is performed in the licensed frequency band. Fig. 12 is a conceptual diagram of a case in which frequency division multiplexing is performed depending on whether or not it is the licensed frequency band.

In this manner, operating frequencies for communication between a UE and a UE or a gNB and communication between a device and a UE or a gNB can be separated, and therefore, for example, a problem such as interference can be reduced, and communication between a UE and a UE or a gNB and communication between a device and a UE or a gNB can be made to coexist.

However, performing communication between a device and a UE or a gNB outside the frequency band defined in 3GPP and outside the licensed frequency band may cause a problem such as interference with another system. A method for solving such a problem will be disclosed.

Frequency division multiplexing may be performed within the frequency band defined in 3GPP. In both communication between a device and a UE or a gNB and communication between a UE and a UE or a gNB, the frequency band defined in 3GPP is used. For communication between a device and a UE or a gNB, for example, a DL frequency band defined in 3GPP may be used, or for example, a UL frequency band defined in 3GPP may be used. For communication between a device and a UE or a gNB, for example, a TDD frequency band may be used, or an FDD frequency band may be used.

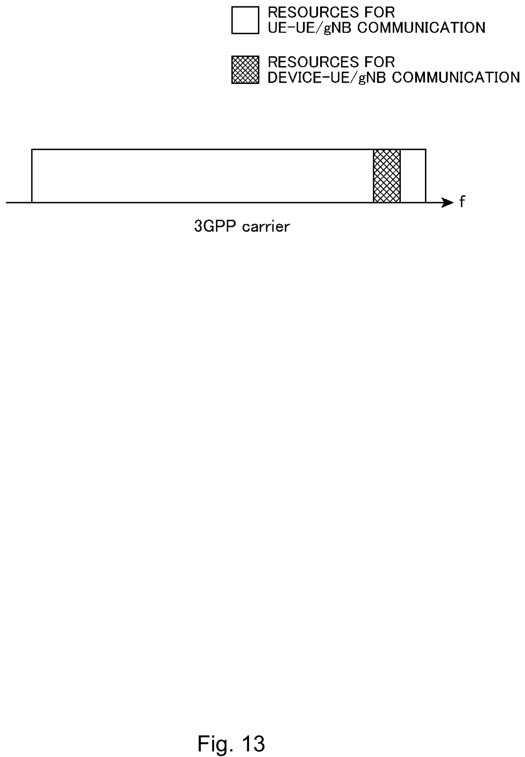

Frequency division multiplexing may be performed in a predetermined band within the frequency band defined in 3GPP. Within the frequency band defined in 3GPP, a frequency band used for communication between a device and a UE or a gNB and a frequency band used for communication between a UE and a UE or a gNB are divided. Fig. 13 is a conceptual diagram of a case in which frequency division multiplexing is performed within the frequency band defined in 3GPP. A part of the band within the frequency band defined in 3GPP is used for communication between a device and a UE or a gNB, and the rest of the band is used for communication between a UE and a UE or a gNB.

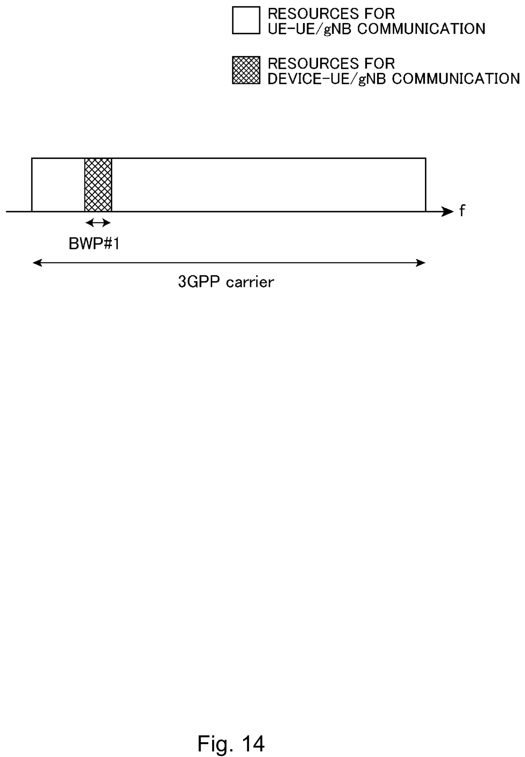

As a method of dividing the frequency band, a BWP may be used. The frequency band used for communication between a device and a UE or a gNB may be configured as the BWP. Fig. 14 is a conceptual diagram of a case in which the BWP is used as a method of dividing the frequency band. The frequency band used for communication between a device and a UE or a gNB is configured as BWP #1. The BWP used for communication between a UE and a UE or a gNB may be configured from a frequency other than BWP #1. In this manner, a configuration of the frequency band used for communication between a device and a UE or a gNB can be made similar to a configuration of the frequency band used for communication between a UE and a UE or a gNB in a radio access technology (RAT) defined in 3GPP. This facilitates introduction of the frequency band used for communication between a device and a UE or a gNB into the RAT defined in 3GPP.

The frequency band used for communication between a device and a UE or a gNB may be a resource block (RB) unit. The RB may indicate resources on the frequency-time axis, or may indicate resources on the frequency-axis. Here, it indicates resources on the frequency-axis as the frequency band is disclosed. Using one RB, communication between one or a plurality of devices and a UE or a gNB may be performed. The frequency band used for communication between a device and a UE or a gNB may be a subcarrier unit. Using one subcarrier, communication between one or a plurality of devices and a UE or a gNB may be performed. In this manner, effects similar to those in the above can be achieved.

Communication between a device and a UE or a gNB may be performed in one or a plurality of subcarriers, one or a plurality of RBs, and one or a plurality of BWPs, and not all the subcarriers, RBs, and BWPs need to be used. For example, it may be configured by taking account of leakage power or the like to adjacent frequencies due to communication between a device and a UE or a gNB.

In communication between a device and a UE or a gNB, on-off keying or amplitude shift keying (ASK) may be used. For communication between a device and a UE or a gNB, phase shift keying (PSK) and quadrature amplitude modulation (QAM) may be used. For example, binary phase shift keying (BPSK) may be used. In such a case, data timing in on-off keying or ASK or symbol timing in PSK and QAM used in communication between a device and a UE or a gNB may be adjusted in conformity with a symbol length used in a Uu interface between a UE and a UE or a gNB. In this manner, one subcarrier can be used.

As another method, the data timing in on-off keying or ASK or the symbol timing in PSK and QAM used in communication between a device and a UE or a gNB need not be adjusted in conformity with a symbol length used in an interface between a UE and a UE or a gNB. For example, the data timing in on-off keying or ASK or the symbol timing in PSK and QAM used in communication between a device and a UE or a gNB may be made shorter than a symbol length used in an interface between a UE and a UE or a gNB. Thus, communication between a device and a UE or a gNB can be performed in one subcarrier.

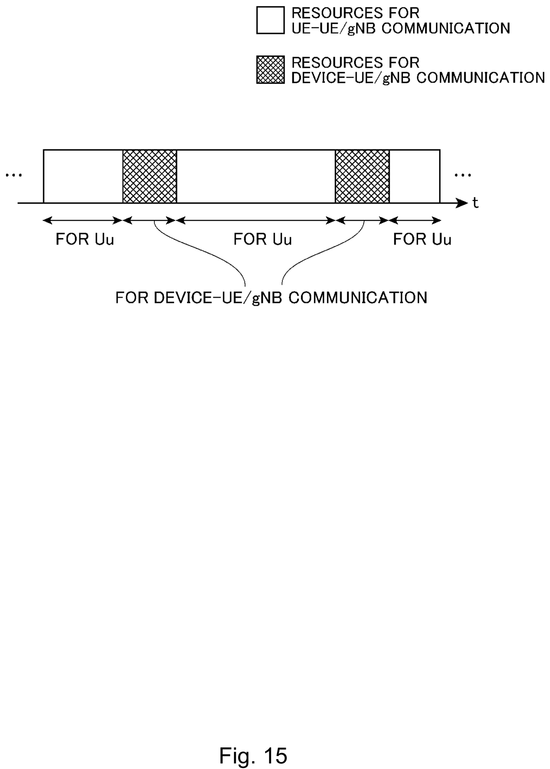

Another method for making communication between a UE and a UE or a gNB and communication on an air interface between a device and a UE or a gNB coexist will be disclosed. Communication between a device and a UE or a gNB and communication between a UE and a UE or a gNB are subjected to time division multiplexing. Fig. 15 is a conceptual diagram of a case in which time division multiplexing is performed. Time for communication between a device and a UE or a gNB and time for communication between a UE and a UE or a gNB are made different. In this manner, operating times for communication between a UE and a UE or a gNB and communication between a device and a UE or a gNB can be separated, and therefore, for example, a problem such as interference can be reduced, and communication between a UE and a UE or a gNB and communication between a device and a UE or a gNB can be made to coexist.

A time unit for division may be a radio frame unit. This allows resources to be used for a relatively long period for communication between a device and a UE or a gNB. Alternatively, it may be a slot unit. Alternatively, it may be a symbol unit. These may be combined. A more flexible configuration can be achieved as resources for communication between a device and a UE or a gNB. For example, a configuration appropriate for a service for performing communication between a device and a UE or a gNB can be achieved.

Time resources for communication between a device and a UE or a gNB may be within the same radio frame. Alternatively, they may be within the same slot. This can facilitate time division multiplexing with communication between a UE and a gNB. The time resources for communication between a device and a UE or a gNB may be configured across one or a plurality of radio frames. Alternatively, they may be configured across one or a plurality of slots. In this manner, for example, communication can be performed even when communication between a device and a UE or a gNB requires a large amount of time.

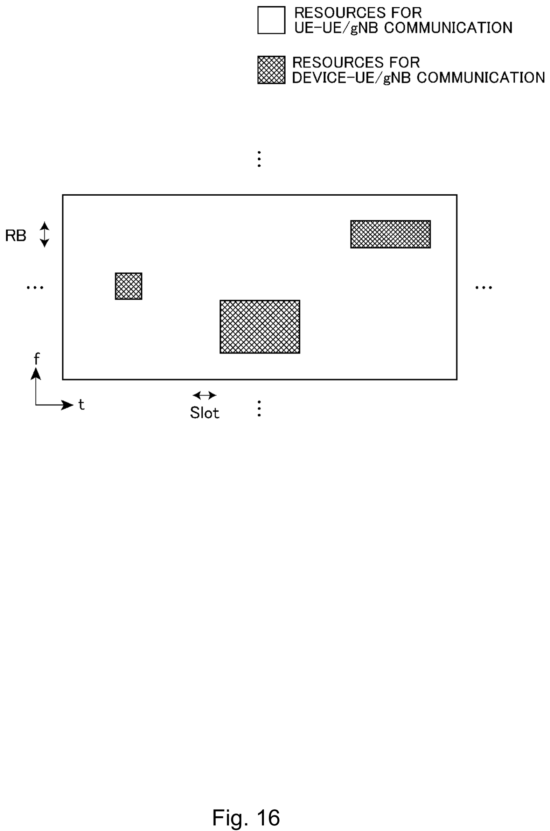

Frequency division multiplexing and time division multiplexing may be combined. Fig. 16 is a conceptual diagram of a case in which frequency division multiplexing and time division multiplexing are combined. Frequency and time for communication between a device and a UE or a gNB and frequency and time for communication between a UE and a UE or a gNB are made different. In this manner, a more flexible configuration can be achieved as resources for communication between a device and a UE or a gNB. Resources for communication between a UE and a UE or a gNB and resources for communication between a device and a UE or a gNB can be made to coexist more efficiently. Within the frequency band defined in 3GPP, division multiplexing is performed in a predetermined subcarrier unit and a slot unit. The predetermined subcarrier unit may be an RB unit. For example, using the RB unit and the slot unit can facilitate a resource configuration for communication between a UE and a gNB and a resource configuration for communication between a device and a UE or a gNB.

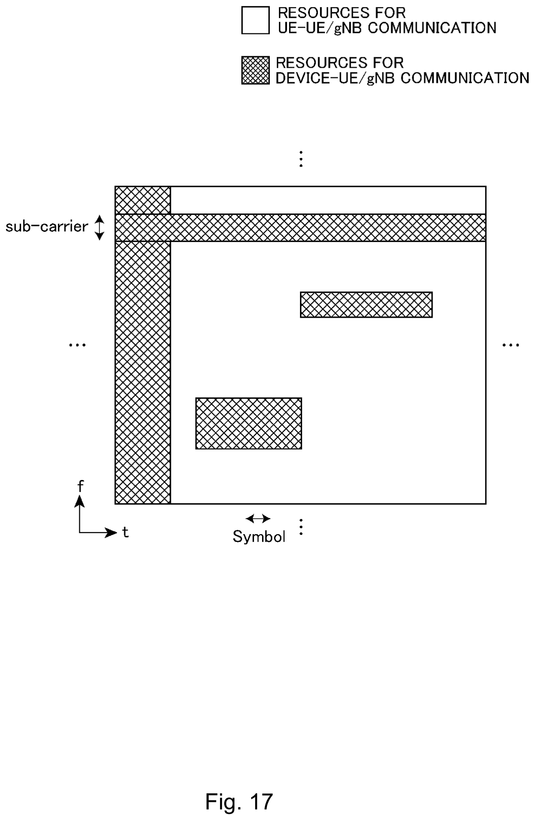

Fig. 17 is another conceptual diagram of a case in which frequency division multiplexing and time division multiplexing are combined. Frequency and time for communication between a device and a UE or a gNB and frequency and time for communication between a UE and a UE or a gNB are made different in one RB. The RB indicates resources on the frequency-time axis. Division multiplexing is performed by using one or a plurality of subcarriers and one or a plurality of symbols. In this manner, a finer and more flexible configuration can be achieved. For example, an appropriate configuration can be achieved even when a small amount of communication is performed between a device and a UE or a gNB.

Another method for making communication between a UE and a UE or a gNB and communication on an air interface between a device and a UE or a gNB coexist will be disclosed. Communication between a device and a UE or a gNB and communication between a UE and a UE or a gNB are subjected to spatial multiplexing. In communication between a device and a UE or a gNB and communication between a UE and a UE or a gNB, the same resources in the frequency-time axis may be used. Even when the same resources are used, owing to spatial multiplexing, communication between a device and a UE or a gNB and communication between a UE and a UE or a gNB can be separated. In spatial multiplexing, for example, beams may be used. Beams used for UE-device communication and beams used for UE-gNB communication may be made different. In this manner, for example, a problem such as interference can be reduced, and communication between a UE and a UE or a gNB and communication between a device and a UE or a gNB can be made to coexist.

A configuration of a multiplexing method may be performed for each system. Alternatively, it may be performed for each PLMN or non-public network (NPN). In this manner, which multiplexing method is configured is determined as the system or as the PLMN or the NPN, and therefore, for example, a dynamic change is made unnecessary and control is facilitated.

The configuration of the multiplexing method may be performed for each base station (gNB) or for each cell. In this manner, for example, a configuration of communication resources configured in a base station and a cell and the configuration of the multiplexing method can be performed in association with each other. For example, a multiplexing method appropriate for resources necessary for communication between a UE and a UE or a gNB and communication between a device and a UE or a gNB can be configured.

The configuration of the multiplexing method may be performed for each UE. The configuration appropriate for a state of the UE can be performed. Coexistence between communication between a device and a UE or a gNB and communication between a UE and a UE or a gNB can be efficiently performed.

The configuration of the multiplexing method may be performed for each device. The configuration appropriate for a state of the device can be performed. For example, for each device, the configuration appropriate for a service using the device can be performed. In a device used for a service that requires a small amount of data communication, a small amount of resources for each subcarrier and for each symbol is configured and multiplexed for communication between a device and a UE or a gNB, and thus unnecessary resource configurations can be avoided.

As the configuration of the multiplexing method, the methods disclosed in the above may be combined. A more flexible configuration can be achieved.

In this manner, when communication between a device and a UE or a gNB is performed in the mobile communication system, interference with another system can be reduced. Communication between a device and a UE or a gNB and communication between a UE and a UE or a gNB can coexist. In the mobile communication system defined in 3GPP, communication with IoT devices having ultra-low power consumption can be performed.

### Second Embodiment

In 3GPP, introducing devices into the mobile communication system has been discussed. In introducing devices into the mobile communication system, it is assumed that a UE that performs communication with the device must perform communication with a UE or a gNB. A method for enabling such a UE to perform communication with the device and the gNB will be disclosed.

Time for UE-device communication is provided. In the Specification, the time for UE-device communication may be referred to as a gap for UE-device communication, or simply as a gap. There may be one or a plurality of gaps.

The gap may be provided for each base station. The UE performs communication with the device by using the gap configured for each base station. The UE served by the base station can perform UE-device communication by using the gap. The base station may be a master node, or may be a secondary node. For example, UE-device communication can be performed using dual connectivity (DC) and multi connectivity (MC).

The gap may be provided for each cell. The UE performs communication with the device by using the gap configured for each cell. The UE configured with a cell for communication may be capable of performing communication with the device by using the gap for each cell. The cell may be a PCell, may be a PSCell, may be an SPCell, or may be an SCell. For example, the gap can be easily taken into account in scheduling for each cell for the UE.

The gap may be provided for each UE. The UE performs communication with the device by using the gap configured for the UE itself. For example, in the gap, communication between one UE and one or a plurality of devices may be performed. The gap can be made different for each UE, and therefore, for example, interference between UEs in UE-device communication can be reduced.

The gap may be provided for each device. Communication between the UE and the device is performed by using the gap configured for the device. The gap can be made different for each device, and therefore interference between devices in UE-device communication can be reduced.

The gap may be provided for each frequency range. A gap for frequency range (FR) 1 may be provided. A gap for FR2 may be provided. FR1 and FR2 are frequency ranges defined in 3GPP, and the frequency range corresponding to FR1 is 410 MHz to 7125 MHz and the frequency range corresponding to FR2 is 24250 MHz to 71000 MHz (NPLs 35 and 36). Device-UE communication is performed by using the gap provided in the frequency range in which communication between the UE and the gNB is performed.

The gap may be provided for each frequency band. The frequency band may be an operating band (NPLs 35 and 36). Device-UE communication is performed by using the gap provided in the frequency band in which communication between the UE and the gNB is performed. The gap may be provided for each carrier. Device-UE communication can be performed by using the gap provided in the carrier in which communication between the UE and the gNB is performed. The gap may be provided for each BWP. Device-UE communication can be performed by using the gap provided in the BWP in which communication between the UE and the gNB is performed.

The gap may be provided for each service. The gap may be configured for each service using the device. UE-device communication is performed by using the gap configured for the service using the device. Examples of the service using the device include a service for enhanced Mobile Broadband (eMBB) communication, a service for massive Machine Type Communications (mMTC) communication, a service for Ultra-Reliable and Low Latency Communications (URLLC) communication, and the like. Other examples of the service include asset tracking, access control, and the like. Even among these services, the gap may be provided for each different service for a different provider, for example. In a configuration of the gap, information for identifying the service may be notified. The UE configured with the gap can recognize to which service the gap corresponds.

Information indicating a type of the gap may be provided. The configuration of the gap may include information indicating the type of the gap. The UE configured with the gap can recognize the type of the gap.

When a plurality of types of gaps are configured for the UE, the UE may use a gap configuration of any type corresponding to communication with the device. The UE may select the gap configuration to be used for communication with the device. In this manner, for example, the gap configuration with the earliest timing can be selected, and UE-device communication can be performed with low delay. As another method, a priority may be provided to the gap configuration selected when a plurality of types of gaps are configured for the UE. The priority may be determined in a standard or the like in advance, or may be notified from the NW. For example, when a gap configuration for each device and a gap configuration for each service are configured for the UE, the gap configuration for each device may be preferentially used. This can reduce problems such as the inability to perform communication with all of the devices in the gap for each service when there are a number of devices for one service. Thus, it eliminates the need for a configuration that secures the gap for each service for a long period, and therefore radio resource use efficiency can be enhanced.

When a plurality of gaps of the same type are configured for the UE, the UE may use any gap configuration corresponding to communication with the device. The UE may select the gap configuration to be used for communication with the device. Effects similar to those in the above can be achieved.

When times of the plurality of gaps configured for the UE partially or entirely overlap, the method disclosed in the above may be applied as appropriate. Similar effects can be achieved. As another method, out of the plurality of partially or entirely overlapping gaps, the gap configuration whose timing to start the gap is the earliest timing may be selected. Similarly, UE-device communication can be performed with low delay. When the timings to start the gap are the same, the method disclosed in the above may be applied as appropriate.

A method of configuring the gap will be disclosed. The gap configuration is transmitted from the base station to the UE. There may be one or a plurality of gap configurations. Information for identifying the gap configuration may be provided. The base station may transmit, to the UE, the gap configuration and information (for example, an identifier) for identifying the gap configuration in association with each other. The gap configuration may be semi-statically transmitted. As a transmission method, broadcasting may be performed. For example, the gap configuration may be included in a SIB. The base station may broadcast the gap configuration from a cell by using the SIB. In this manner, the UE served by the cell can receive the gap configuration.

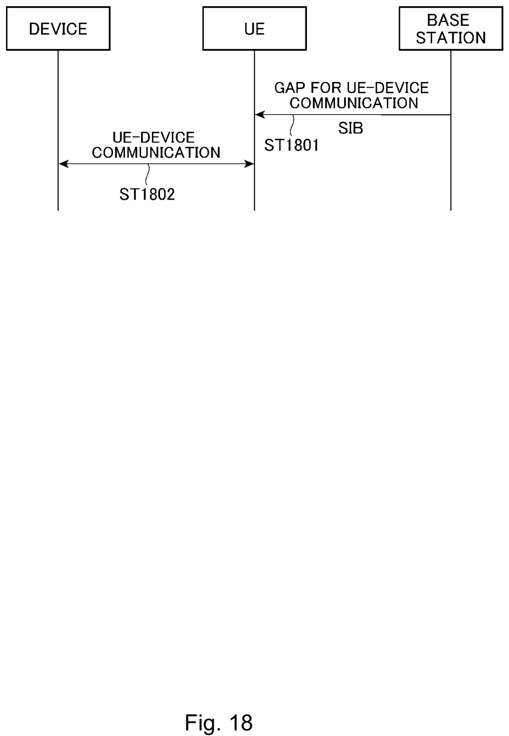

Fig. 18 is a diagram illustrating a sequence example of a method of broadcasting the gap configuration. In Step ST1801, the base station includes the gap configuration in the SIB to broadcast the gap configuration. In Step ST1802, the UE that has received the SIB including the gap configuration uses the gap configuration for UE-device communication. By including the gap configuration in the SIB to broadcast the gap configuration, the UE can receive the gap configuration regardless of an RRC state of the UE. For example, even the UE in RRC_IDLE can receive the gap configuration, and can thus perform UE-device communication.

Another method of configuring the gap will be disclosed. The base station includes the gap configuration in an RRC message. The base station notifies the UE of the gap configuration by using RRC signaling. The gap configuration may be notified to each UE. In this manner, the gap configuration can be individually notified to the UE. For example, the gap configuration appropriate for the UE, such as the gap configuration for each UE, can be notified.

The base station may include the gap configuration in a MAC CE. The base station may notify the UE of the gap configuration by using MAC signaling. In this manner, the gap configuration can be notified to the UE at an early time. The base station may include the gap configuration in DCI. The base station may notify the UE of the gap configuration by using a PDCCH. In this manner, the gap configuration can be notified to the UE at an earlier time. For example, the base station can dynamically change and configure the gap configuration for the UE. The gap configuration appropriate for a constantly changing surrounding radio wave propagation environment can be dynamically configured.

The base station may perform a reconfiguration of the gap for UE-device communication for the UE. The base station may perform a change of the gap configuration for UE-device communication for the UE. When the base station performs a change of the gap configuration for UE-device communication for the UE, the base station may perform notification of a part or all of information on the configuration. As a part of the information on the gap configuration, for example, only information to be changed may be notified. As a method of reconfiguring and changing the gap from the base station to the UE, the gap configuration method may be applied as appropriate.

Activation and deactivation functions (which may be hereinafter referred to as act/deact) of the gap configuration for UE-device communication may be provided. The base station notifies the UE of act/deact information of the gap configuration. As the act/deact information of the gap configuration, information as to which gap configuration is to be activated/deactivated may be used. For example, an identifier of the gap configuration to be activated/deactivated and information as to whether the gap configuration having the identifier is to be activated/deactivated may be included. In the act/deact information of the gap configuration, for example, only the gap configuration to be activated may be included. The gap configuration that is not included may be deactivated. For example, only the gap configuration to be deactivated may be included. The gap configuration that is not included may be activated. The UE that has received the act/deact information of the gap configuration performs communication between devices by using the activated gap configuration. The UE can perform communication between devices by using the activated gap configuration. The UE that has received the act/deact information of the gap configuration does not use the deactivated gap configuration for communication between devices. The UE cannot perform communication between devices with the deactivated gap configuration. By providing the act/deact information, for example, even when a number of gaps are configured, only the gap configuration to be activated/deactivated may be notified, and the amount of information to be notified to the UE can be reduced. Act/deact of the gap configuration can be flexibly changed with a small amount of information, and therefore a more appropriate gap configuration can be performed.

The notification of the configuration of the gap from the base station to the UE alone may make communication between the UE and the device impossible with the notified gap configuration. By performing notification of the act/deact information of the gap configuration, UE-device communication can be performed by using the activated gap configuration out of the configured gaps.

With notification of the configuration of the gap from the base station to the UE, communication between the UE and the device can be performed with the notified gap configuration. With the act/deact information of the gap configuration notified subsequently, the gap configuration may be activated/deactivated. With the notification of the act/deact information of the gap configuration, the gap configuration to be activated/deactivated may be changed.

The act/deact information may be included in an RRC message. The base station notifies the UE of the act/deact information by using RRC signaling. The act/deact information may be notified to each UE. In this manner, the act/deact information can be individually notified to the UE. For example, the gap configuration appropriate for the UE, such as act/deact of the gap configuration for each UE, can be notified.

The act/deact information may be included in a MAC CE. The base station notifies the UE of the act/deact information by using MAC signaling. The act/deact information may be included in DCI. The base station notifies the UE of the act/deact information by using a PDCCH. In this manner, the act/deact information can be notified to the UE at an earlier time. For example, the base station can dynamically change and configure the act/deact information for the UE. The gap configuration to be activated/deactivated appropriate for a constantly changing surrounding radio wave propagation environment can be dynamically configured.

For example, the base station performs one or a plurality of gap configurations for each cell. One or a plurality of gap configurations are included in the SIB to be broadcast to the UE. The gap configuration may be broadcast in association with an identifier. The notification of the configuration of the gap alone makes communication between the UE and the device impossible with the notified gap configuration. The base station notifies the UE of the act/deact information by using MAC signaling. The UE that has received the act/deact information of the gap configurations and the identifiers of the gaps recognizes which gap configuration can be used and which gap configuration cannot be used for communication with the device. The UE uses the activated gap for communication with the device. In this manner, the UE can perform communication with the device by using the gap configuration notified from the base station.

The configuration of the gap for UE-device communication may be requested from the UE to the base station. Act/deact of the gap configuration for UE-device communication may be requested from the UE to the base station. In this manner, for example, when the UE determines that the UE desires to perform communication with the device, the UE can request the gap configuration for communication with the device and act/deact of the gap configuration from the base station.

The base station that has received a gap configuration request from the UE may perform the gap configuration. The base station may notify the UE of the configured gap configuration. The base station that has received an act/deact request for the gap configuration from the UE may perform act/deact of the gap configuration. The base station may notify the UE of the act/deact information of the configured gap configuration. In this manner, the UE can receive the gap configuration and the act/deact information of the gap configuration from the base station. The UE can perform communication with the device.

The request may be included in an RRC message. The request may be transmitted from the UE to the base station by using RRC signaling. The request may be notified by using UE-specific signaling. In this manner, the gap configuration request can be individually notified to the UE. The act/deact request can be individually notified to the UE.

The request may be included in a MAC CE. The request is notified from the UE to the base station by using MAC signaling. The request may be included in UCI. The request is notified from the UE to the base station by using a PUCCH. A configuration of the PUCCH for the request may be provided. The base station may perform the configuration of the PUCCH for the request for the UE in advance. The request may be notified from the UE to the base station by using an SR. A configuration of the SR for the request may be provided. The base station may perform the configuration of the SR for the request for the UE in advance. In this manner, the request can be transmitted from the UE to the base station at an early time. For example, the UE can dynamically transmit the request to the base station. Thus, the base station can dynamically change and configure the gap configuration and act/deact of the gap configuration for the UE. The configuration appropriate for a constantly changing surrounding radio wave propagation environment can be performed.

The request may be transmitted by using a PUSCH. An SR may be used to request allocation (grant) of the PUSCH for transmitting the request. A configuration of the SR for the request may be provided. The base station may perform the configuration of the SR for the request for the UE in advance. Allocation of the PUSCH for transmitting the request by using the SR is requested from the UE to the base station. The base station that has received the SR performs allocation of the PUSCH for transmitting the request to the UE. The UE that has received the allocation of the PUSCH transmits the request by using the PUSCH. In this manner, the base station can receive the request from the UE. For example, when the request is transmitted by using a MAC CE or when there is no PUSCH for transmitting a MAC CE, the UE can obtain the allocation of the PUSCH from the base station.

The request for the gap configuration and the request for act/deact of the gap configuration may be performed together, or may be performed separately. A flexible request can be performed. There may be one or a plurality of gap configurations to be requested and gap configurations to be requested to be activated/deactivated. The configuration of the gap appropriate for a radio wave propagation environment in the UE and a service using communication with the device can be requested.

There may be one or a plurality of configurations of the SRs to be used for the request. There may be one or a plurality of configurations of the PUCCHs to be used for the request. For example, each SR configuration and each PUCCH configuration may correspond to each gap configuration to be requested and the act/deact request for each gap configuration. For example, together with the gap configuration, the SR configuration and the PUCCH configuration to be used for the request for act/deact of the gap configuration are notified from the base station to the UE in advance. The UE transmits the request to the base station by using the SR configuration and the PUCCH configuration corresponding to the gap configuration to be requested to be activated/deactivated. In this manner, even when the identifier of the gap configuration is not included in the request, the base station can identify the requested gap configuration.

The request may include information indicating a type of the gap. The request may be performed for each type of the gap. For each type of the gap, the request for the configuration of the gap and act/deacat of the gap may be performed by using one request. The request for the configuration of the gap and act/deact of the gap configuration depending on the type can be performed. For example, a different request may be used for a different gap, and this allows the base station that has received the request to recognize the type of the gap to be requested by the configuration used for the request. The request may include an identifier of the device. The request may be performed for each device. For each device, the request for the configuration of the gap and act/deacat of the gap may be performed by using one request. For example, a different request may be used for a different device, and this allows the base station that has received the request to recognize the device to be requested by the configuration used for the request.

The request for act/deact of the gap configuration may include information for identifying the gap to be requested. For example, the information may be used as an identifier of the gap configuration. Owing to the identifier of the gap configuration included in the request, the base station can identify which gap is to be activated/deactivated. The information for identifying the gap may be included in information of the gap configuration. The base station may transmit the information for identifying the gap to the UE in advance in association with the gap configuration.

A method of releasing the gap configuration will be disclosed. The base station notifies the UE of release of the gap configuration for UE-device communication. As a method of performing notification of the release, the method of performing notification of the gap configuration disclosed in the above may be applied as appropriate. The UE can receive the release of the gap configuration. The UE that has received the release of the gap configuration releases the configured gap configuration. The UE that has received the release of the gap configuration may release all of the configured gap configurations for UE-device communication. The release may include information for identifying the gap configuration to be released. The UE that has received the release may identify the gap configuration to be released by using the information. The release may include information indicating a type of the gap configuration. The UE that has received the release may identify the gap configuration to be released by using the information. The release may include information for identifying the device. The UE that has received the release may identify the gap configuration for communication with the device to be released by using the information.

The UE that has received the release of the gap configuration releases the gap configuration. The UE may discard gap configuration information to be released. By enabling release as described above, for example, when UE-device communication is not performed, the UE need not retain unnecessary gap configuration. The memory and the like of the UE can be efficiently used. The gap can be used for UE-gNB communication. Radio resource use efficiency on Uu can be enhanced.

The UE may release the gap configuration depending on a state of the device with which communication is to be performed. For example, the release may be performed when a Registration Management (RM) state of the device transitions to an RM-DEREGISTRATION state. For example, the release may be performed when a Connection Management (CM) state of the device transitions to a CM-IDLE state. For example, the release may be performed when an RRC state of the device transitions to an RRC_IDLE state.

The UE may request the base station to release the gap configuration for UE-device communication. As a method of requesting the release, the method of requesting the gap configuration and act/deact of the gap configuration disclosed in the above may be applied as appropriate. The base station can receive the release of the gap configuration. A release request may include information for identifying the gap configuration to be requested to be released. The base station that has received the release request may identify the gap configuration requested to be released by using the information. The release request may include information indicating a type of the gap configuration. The base station that has received the release request may identify the gap configuration requested to be released by using the information. The release request may include information for identifying the device. The base station that has received the release request may identify the gap configuration for communication with the device requested to be released by using the information.

The UE may transmit the release request to the base station depending on the state of the device. For example, this is effective when the UE recognizes the state of the device but the base station does not recognize the state of the device.

In this manner, the UE can request the base station to release the gap configuration. The base station may notify the UE of the release of the gap configuration by using the release request. In the UE, the effects disclosed in the above can be achieved.

11 examples of information on the gap configuration for UE-device communication are disclosed below. The gap configuration may include pieces of information on the gap configuration.
(1) Information for identifying the gap configuration.
(2) Information on a RAT used for UE-device communication.
(3) Information on a service.
(4) Type of the gap configuration.
(5) Gap length.
(6) Periodicity of the gap.
(7) Gap pattern.
(8) Periodicity of the gap pattern.
(9) Offset of the gap.
(10) Priority.
(11) Combination of (1) to (10).

The information on a service of (3) may be information on a service using UE-device communication. It may be information for identifying a service. It may be information indicating quality required for the service. For example, it may be QoS.

The gap pattern of (7) may be a pattern combining one or a plurality of gaps. The gaps to be combined may have different gap lengths, periodicities, and offsets. The gap pattern may be configured in a predetermined period.

The periodicity of the gap pattern of (8) may be periodicity of repeating of the gap pattern. The predetermined period in which the gap pattern is configured may be repeated. In this case, the predetermined period may be periodicity of the gap pattern.

The offset of the gap of (9) indicates a timing to start the gap. The offset may be an offset from a radio frame boundary. The offset may be an offset from a slot boundary.

Pieces of information on the time axis such as the gap length, the gap periodicity, the gap pattern, the periodicity of the gap pattern, and the offset of the gap may be a time unit, may be a symbol unit, may be a slot unit, may be a subframe unit, may be a transmission timing interval (TTI) unit, or may be a radio frame unit.

The configuration of the gap for UE-device communication is performed by using these pieces of information.

Regardless of whether the UE is in the RRC_Idle state or the RRC_Inactive state, the UE may retain the gap configuration for UE-device communication. The UE in the RRC_Idle state or the RRC_Inactive state can perform UE-device communication by using the gap. A configuration as to whether or not the UE retains the gap configuration in the RRC_Idle state or the RRC_Inactive state may be included in the information on the gap configuration for UE-device communication described above. Whether or not to retain the gap configuration can be configured.

When the UE in the RRC_Idle state or the RRC_Inactive state performs cell re-selection, the UE may connect to a re-selected cell in order to acquire the gap configuration for UE-device communication, and acquire the gap configuration for UE-device communication from the base station.

The base station that has performed the gap configuration for UE-device communication for the UE may notify surrounding base stations of the gap configuration for UE-device communication of the UE. For example, the UE in the RRC_Idle state may use the configured gap configuration for UE-device communication until the UE transitions to RRC_Connected next. The UE need not perform processing of acquiring the gap configuration for UE-device communication. The base station that has performed the gap configuration for UE-device communication for the UE may notify base stations in an RAN notification area (RNA) of the gap configuration for UE-device communication of the UE. For example, the base stations in the RNA may have the same gap configuration for UE-device communication of the UE. For example, the UE in the RRC_Inactive state may use the same gap configuration for UE-device communication in the RNA. The UE need not perform processing of acquiring the gap configuration for UE-device communication.

The UE may notify the base station or a core network (CN) node (which need not be limited to a node and may be a function) of information indicating that the UE has the capability to perform communication with the device. The CN node may be an AMF, an SMF, a PCF, or an application function (AF) for the service using the device, for example. Together with the information, the identifier of the UE that has performed transmission may be notified. Together with the information, information on the service using the device may be notified.

The information indicating the capability to perform communication with the device may be information indicating support of a RAT or a communication method used for communication with the device. The information may be the number of devices capable of communication. The information may be information on a frequency for communication with the device. The information on a frequency for communication may be a frequency band. The information may be information of a supported multiplexing method. These pieces of information may be combined. The information may be included in a UE capability. The UE notifies the base station or the CN node of the information by including the information in a UE capability.

Information as to whether or not the UE can simultaneously perform communication between the UE and the device and communication between the UE and a UE or the base station may be provided. Information as to whether or not the UE can simultaneously perform device measurement and communication between the UE and a UE or the base station may be provided. Information as to whether or not the UE can simultaneously perform communication between the UE and the device and device measurement may be provided. The UE may transmit the information to the base station or the CN node. The information may be included in a UE capability. The UE may include the information in a UE capability to transmit the information to the base station or the CN node. Device measurement refers to measurement of communication quality between the UE and the device, and is, for example, measurement of received power of a signal transmitted from the device, measurement of received quality, measurement of a signal to interference plus noise ratio (SINR), or the like.

In this manner, information indicating that the UE has the capability to perform communication with the device can be notified to the base station or the CN node. The base station or the CN node that has received the information can recognize that the UE has the capability to perform communication with the device. The base station or the CN can perform a configuration for communication with the device for the UE. Configurations of the configuration for communication include, for example, a multiplexing method, a gap configuration, and the like.

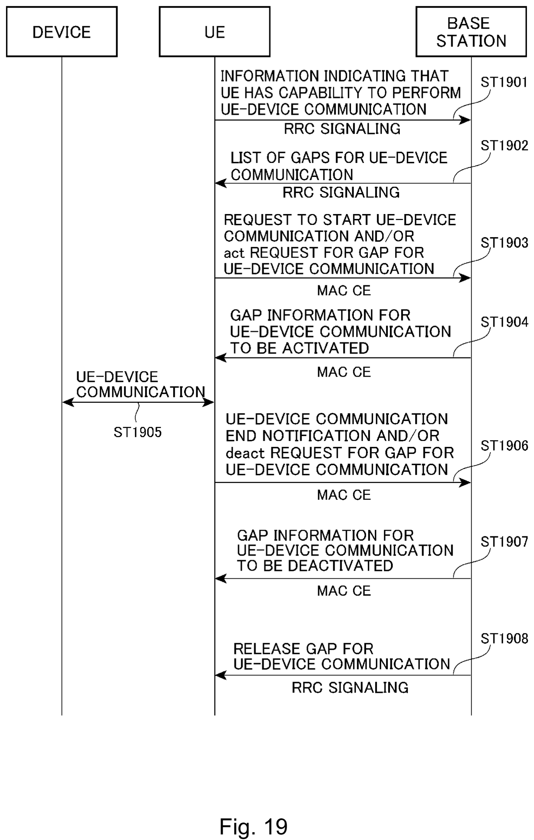

Fig. 19 is a diagram illustrating a sequence example of the gap configuration for UE-device communication. In Step ST1901, the UE transmits, to the base station, information indicating that the UE itself has the capability to perform communication with the device. For transmission of the information, for example, RRC signaling may be used. The base station that has received the information recognizes that the UE has the capability to perform communication with the device. In Step ST1902, the base station transmits the gap configuration for UE-device communication to the UE. One or a plurality of gap configurations may be transmitted as a list. For transmission of the list, for example, RRC signaling is used. The UE that has received the list can acquire the gap configuration for UE-device communication.

In Step ST1902, the base station may include the gap configuration for UE-device communication in a SIB to broadcast the gap configuration for UE-device communication as disclosed in the above. In such a case, the processing of Step ST1901 may be performed after Step ST1902. In this case, the UE that has received the gap configuration for UE-device communication in Step ST1902 may transmit, to the base station, information indicating that has the capability to perform communication with the device in Step ST1901 to be performed next. For example, broadcasting of the gap configuration for UE-device communication may be used as information indicating that a cell supports UE-device communication. Even without the UE transmitting the information indicating that communication with the device can be performed, the UE can recognize that the cell supports UE-device communication.

Regarding the gap configuration for UE-device communication, the base station may perform both of transmission by way of inclusion in the SIB and individual transmission to the UE via RRC or the like. For example, the UE may use either of the gap configurations. For example, the gap configuration individually transmitted to the UE may be prioritized. When the gap configuration is individually transmitted to the UE, the UE may use the gap configuration.

In Step ST1903, the UE transmits a request to start UE-device communication to the base station. An act request for the gap configuration for UE-device communication may be transmitted. For example, it may be transmitted when the UE determines to perform communication with the device. For example, it may be transmitted when the UE performs communication with the device and there is no activated gap configuration for UE-device communication. For transmission of the request, for example, MAC signaling may be used. The request may be included in a MAC CE to be transmitted. For example, the request can be transmitted at an early time since the UE has determined to perform communication with the device. The base station that has received the request can recognize that the UE requests act of the gap configuration for UE-device communication.

In Step ST1904, the base station transmits gap configuration information for UE-device communication to be activated to the UE. The information may be an identifier of the gap configuration. The gap configuration to be activated may be selected out of the gap configuration list configured in Step ST1902. In the information, for example, one or a plurality of gap configurations may be represented in a bitmap. The gap configuration to be activated in the bitmap may be activated (for example, 1). For transmission of the information, for example, MAC signaling may be used. The information may be included in a MAC CE to be transmitted. For example, the base station can transmit the gap configuration information for UE-device communication to be activated at an early time. The UE can receive the gap configuration information for UE-device communication at an early time.

In Step ST1905, the UE performs communication with the device. For UE-device communication, the gap configuration to be activated received in Step ST1904 may be used. The UE may perform communication with the device in the configured gap. For the configuration information of the gap, the gap configuration information received in Step ST1902 may be used. In this manner, UE-device communication can be performed. When the base station uses the configured gap configuration for UE-device communication, for example, interference between communication between the UE and the device and communication between the UE and a UE or the base station can be avoided.

In Step ST1906, the UE notifies the base station of communication end with the device. The UE may request the base station to deactivate the gap configuration for UE-device communication. The identifier of the gap configuration to be deactivated may be included in the request to be transmitted. For transmission of the information, for example, MAC signaling may be used. The information may be included in a MAC CE to be transmitted. For example, the request can be transmitted at an early time since the UE has determined to end communication with the device. The base station that has received the request can recognize that the UE has ended UE-device communication and requests deact of the gap configuration for the communication.

In Step ST1907, the base station transmits gap configuration information for UE-device communication to be deactivated to the UE. The information may be an identifier of the gap configuration. The gap configuration to be deactivated may be selected out of the gap configuration list configured in Step ST1902. In the information, for example, one or a plurality of gap configurations may be represented in a bitmap. The gap configuration to be deactivated in the bitmap may be deactivated (for example, 0). For transmission of the information, for example, MAC signaling may be used. The information may be included in a MAC CE to be transmitted. For example, the base station can transmit the gap configuration information for UE-device communication to be deactivated at an early time. Resources of the deactivated gap configuration can be used for other purposes, and therefore resource use efficiency can be enhanced.

In Step ST1908, the base station may transmit release of the gap configuration for UE-device communication to the UE. For example, it may be transmitted when the base station determines that the UE-device communication service has ended and when the base station determines that the UE-device communication service is to be suspended for a long period. For transmission of the information, for example, RRC signaling may be used. The UE that has received the release releases the gap configuration for UE-device communication. In this manner, the UE no longer needs to retain the gap configuration even after the UE-device communication service has been suspended or has ended, and therefore, for example, capacity of the buffer and the like can be reduced. The base station can use resources of the released gap configuration for other purposes, and therefore resource use efficiency can be enhanced.

The base station may notify the UE of a communication request with the device. The CN node may notify the UE of a communication request with the device. The CN node may perform notification of the communication request via the base station. The communication request may include information for identifying the device. There may be one or a plurality of devices for which the communication request is performed. This is effective when the CN node or the base station recognizes the device(s) for which the communication request is performed. The communication request may include information on a service for which the communication request is performed. The information may be information for identifying the service, QoS required for the service, or the like, for example. The UE can recognize for which service the UE-device communication has been requested. The UE that has received the request performs communication with the device.

For communication with the device, the UE may use the gap configuration configured for UE-device communication. The gap configuration for UE-device communication may be notified from the base station to the UE in advance. Alternatively, the gap configuration for UE-device communication may be notified together with the communication request. The information for identifying the device for which the communication request is performed and the information for identifying the gap configuration may be notified in association with each other. The gap configuration used for communication with the device for which the communication request is performed can be configured.

A notification of the act information of the gap configuration for UE-device communication may be used as a notification of the communication request. A notification of act information of the act/deact information of the gap configuration may be used as a notification of the communication request. The act information of the gap configuration may include the information for identifying the device for which the communication request is performed. The act information of the gap configuration may include information on the service for which the communication request is performed. The UE that has received the act information of the gap configuration performs communication with the device. The gap configuration to be activated and the information for identifying the device for which the communication request is performed may be notified in association with each other. The gap configuration used for communication with the device for which the communication request is performed can be configured.

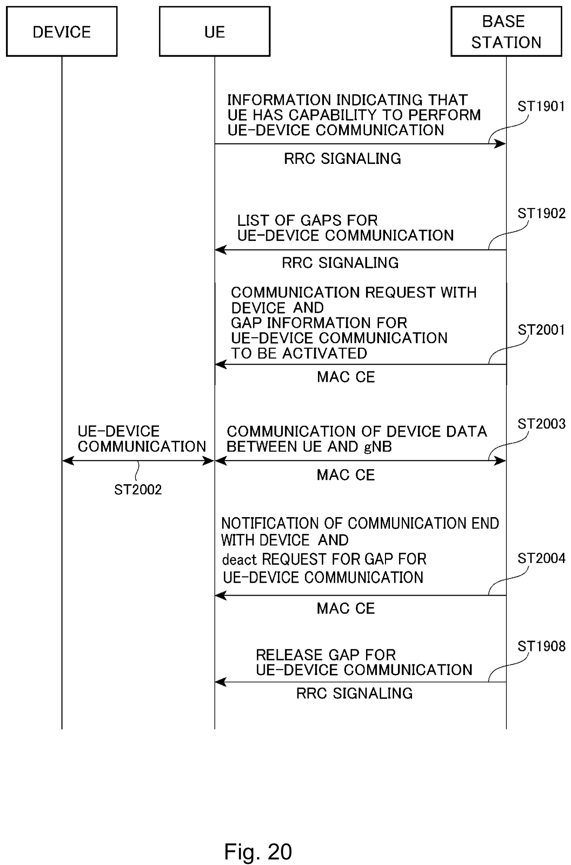

Fig. 20 is a diagram illustrating another sequence example of the gap configuration for UE-device communication. It illustrates a sequence example of a case in which the communication request with the device is notified from the base station to the UE. The steps common to those of Fig. 19 are denoted by the same step numbers, and common description is omitted.

In Step ST2001, the base station transmits the communication request with the device to the UE. The communication request may include an identifier of the device for which the communication request is performed. With which device the communication is requested can be notified to the UE. The UE that has received the request can recognize with which device the UE may perform communication. In Step ST2001, the base station may notify the UE of the act information of the gap configuration for UE-device communication. The identifier of the gap configuration to be activated may be included. In Step ST2001, a notification of the act information of the gap configuration for UE-device communication may be used as a notification of the communication request. The gap configuration for communication with the device requested for the UE may be the gap configuration for UE-device communication to be activated. The UE can recognize the gap configuration to be used for communication with the device. For notification of the communication request, MAC signaling may be used. Information indicating the communication request may be included in a MAC CE.

In Step ST2002, the UE performs UE-device communication. For UE-device communication, the gap configuration to be activated received in Step ST2001 may be used. The UE may perform communication with the device in the configured gap. For the configuration information of the gap, the gap configuration information received in Step ST1902 may be used. In this manner, UE-device communication can be performed. In Step ST2003, the UE transmits device data received from the device to the base station. In Step ST2003, the UE may receive data for the device from the base station. The UE may transmit the data for the device received from the base station to the device in Step ST2002. In this manner, communication between the UE and the device and communication of the device data between the UE and the base station can be performed. Communication between the device and the NW via the UE can be performed. For the communication, MAC signaling may be used. The device data between the UE and the base station may be included in a MAC CE. Note that, in the Specification, data transmitted and received by the device, i.e., data transmitted by the device and data received by the device (data to be transmitted to the device), is referred to as the device data.

For communication of the device data between the UE and the base station, RRC signaling may be used. The device data may be included in an RRC message. The device data may be included in RRC signaling to be transmitted. For example, the device data may be included in a ULInformationTransfer message, a DLInformationTransfer message, and an RRCReconfiguration message to be transmitted. For example, it may be included in a NAS message to be transmitted by using RRC signaling. In this manner, more device data segments can be communicated between the UE and the base station.

For communication of the device data between the UE and the base station, L1/L2 signaling may be used. The device data may be included in DCI or UCI. The device data may be included in DCI to be transmitted by using a PDCCH. The device data may be included in UCI to be transmitted by using a PUCCH. In this manner, the device data can be communicated between the UE and the base station at an earlier time.

For communication of the device data between the UE and base station, RA processing may be used. For example, the device data may be included in Msg2, Msg3, and Msg4 of 4-step RA processing to be transmitted, or may be included in MsgA and MsgB of 2-step RA processing to be transmitted. In this manner, the device data can be communicated between the UE and the base station at an earlier time.

In Step ST2004, the base station may notify the UE of communication end with the device. The notification of the communication end may include an identifier of the device to end communication with. With which device the communication is to be ended can be notified to the UE. For the communication end notification, MAC signaling may be used. Information indicating the communication end may be included in a MAC CE. In this manner, the UE can be notified at an early time. As another method, the information indicating the communication end may be transmitted together with data or as data. For example, information indicating the last data is transmitted together with data or as data. In this manner, control can be facilitated.

In Step ST2004, the base station may notify the UE of the deact information of the gap configuration for UE-device communication. The identifier of the gap configuration to be deactivated may be included. In Step ST2004, a notification of the deact information of the gap configuration for UE-device communication may be used as a notification of the communication end. The gap configuration for communication with the device to end the communication for the UE may be the gap configuration for UE-device communication to be deactivated. The UE can recognize the gap configuration used for the communication with the device to be ended.

One or a plurality of gap configurations may be statically determined in a standard or the like. The gap configuration may be statically determined in correspondence with one or a plurality of devices or a device group consisting of one or a plurality of devices. The gap configuration may be statically determined in correspondence with the service using UE-device communication. The gap configuration may be statically determined in correspondence with QoS of the service using UE-device communication. Owing to the static determination in advance, a signaling load can be reduced.

The gap for UE-device communication may be automatically configured. When the base station or the CN node requests the configuration of the gap for UE-device communication for the UE or when the UE receives the request, the gap configuration may be automatically configured. When the base station or the CN node requests UE-device communication for the UE or when the UE receives the request, the gap configuration may be automatically configured. When the base station or the CN node receives a registration request of the device, the gap configuration may be automatically configured. The automatically configured gap may be the gap configuration statically determined in a standard or the like as disclosed in the above. The base station need not notify the UE of the gap configuration information, and a signaling load can be reduced.

The UE may determine the gap configuration to be used for UE-device communication. The UE may select the gap configuration to be used for UE-device communication out of the one or more statically determined gap configurations. The UE can select the gap configuration appropriate for a radio wave propagation environment, a state of resource use, and the like.

In the present embodiment, providing the gap for UE-device communication has been described. The gap configuration may be used as the gap configuration for UE-device communication in device-NW communication via the UE. In the gap for UE-device communication, UE-device communication can be performed. The UE-device communication need not be limited to transmission from the device to the UE but may be transmission from the UE to the device as well.

The base station may perform the gap configuration for UE-device communication for a plurality of UEs. The base station may adjust the period of the gap for UE-device communication for the UE. For example, adjustment may be performed so that the gap periods do not overlap. When the base station receives the request for the gap for UE-device communication from the UE, the gap configuration for the UE from which the request has been received may be performed so as not to overlap with the gaps for UE-device communication for other UEs. In this manner, interference due to communication between a plurality of UEs and the device can be reduced.

When the UE-device communication does not end in the gap for UE-device communication, the UE-device communication may be performed by using the next gap. The same gap configuration may be used as the next gap. Control of the UE and the device can be facilitated. Another gap configuration may be used as the next gap. This may enable UE-device communication at an early time.

When the UE-device communication does not end in the gap for UE-device communication, the UE may request the gap configuration for UE-device communication or request act of the gap configuration for UE-device communication for the base station. The base station may perform another gap configuration for UE-device communication for the UE, or may perform act of another gap configuration for UE-device communication. The UE can perform UE-device communication by using the configuration.

The UE may notify the base station of the amount of communication between the UE and the device. The amount of communication may be the amount of device data communication. The UE may notify the base station of a communication period between the UE and the device. The communication period may be a period in which device data communication is performed. The information may be included in the request for the configuration for UE-device communication from the UE to the base station, or may be included in the act request for the configuration for UE-device communication. Alternatively, it may be included in the request to start UE-device communication. It may be transmitted separately from these. The base station may use the information received from the UE for the configuration for UE-device communication for the UE. In this manner, the base station can perform configuration of the gap appropriate for UE-device communication.

The base station may transmit information on the configuration for UE-device communication configured for the UE to a HO target base station (target gNB) in HO processing of the UE. The information may be transmitted by using an inter-base station interface. For example, it may be transmitted by using Xn signaling. For example, the information may be included in a HANDOVER REQUEST message to be transmitted. The HO target base station performs the configuration for UE-device communication for the UE. For the configuration, information on the configuration for UE-device communication of the UE received from a HO source base station (source gNB) may be used. It may be the same configuration, or may be a partially or entirely different configuration.

The HO target base station transmits the configuration for UE-device communication of the UE to the UE. The HO target base station may transmit information on the configuration to the HO source base station. The HO source base station transmits the information on the configuration to the UE. Transmission of the information on the configuration from the HO target base station to the HO source base station may be transmitted by using an inter-base station interface. For example, it may be transmitted by using Xn signaling. For example, the configuration information may be included in a HANDOVER REQUEST ACKNOWLEDGE message to be transmitted. Transmission of the information on the configuration from the HO source base station to the UE may be transmitted by using RRC signaling. For example, the configuration information may be included in an RRCReconfiguration message to be transmitted.

In this manner, even when the UE moves between base stations, information on the configuration for UE-device communication can be acquired in the HO target base station, and the UE-device communication can be performed by using the configuration.

In the gap for UE-device communication, the UE need not perform communication and processing between the UE and a UE or the base station. By configuring the gap for UE-device communication, for example, even when the UE-device communication is performed in a frequency different from that for communication between the UE and a UE or the base station, the UE can perform communication with the device by changing frequencies in the gap for communication between devices. The communication between the device and the UE and communication between the UE and a UE or the base station can be made to coexist. By configuring the gap for UE-device communication, for example, interference between communication between the UE and the device and communication between the UE and a UE or the base station can be avoided. High-quality and stable communication can be provided between the UE and the device and between the UE and a UE or the base station.

By configuring the gap having a predetermined period for UE-device communication, for example, even when communication methods, reference timings, and the like are different between the UE-device communication and communication on Uu or PC5, the UE-device communication can be performed in the period of the gap.

When the gap for UE-device communication and a SIB transmission timing overlap, the UE may prioritize SIB reception. When the gap for UE-device communication and a specific SIB transmission timing overlap, the UE may prioritize the specific SIB reception. The specific SIB may be a SIB including emergency information and alarm information. Examples of the emergency information and the alarm information include the Earthquake and Tsunami Warning System (ETWS), the Commercial Mobile Alert System (CMAS), and the like. In this manner, even when the gap for UE-device communication is configured, the UE can receive the emergency information and the alarm information.

When the gap for UE-device communication and a UCI transmission timing overlap, the UE may prioritize UCI transmission. When the gap for UE-device communication and a transmission timing of specific DCI overlap, the UE may prioritize transmission of the specific UCI. The specific DCI may be an SR. In this manner, the UE can start communication with the base station at an early time.

When the gap for UE-device communication and a paging reception timing overlap, the UE may prioritize paging reception. In this manner, the UE can start communication with the base station at an early time.

### Third Embodiment

In 3GPP, introducing devices into the mobile communication system has been discussed. In introducing devices into the mobile communication system, the UE and the base station must recognize a device capable of communication. The present embodiment will disclose a method in which the UE and the base station recognize a device capable of communication.

The UE detects a device present nearby. The UE may detect a device capable of communication. A device detection method performed by the UE will be disclosed.

The UE measures received power from a device. The received power may be a received signal strength indicator (RSSI), for example. This eliminates the need for measurement of an RS used for communication on Uu. The UE may measure received quality from a device. The UE may measure a SINR from a device. A threshold may be provided to measurement results. A threshold may be provided to the received power, the received quality, and the SINR. The UE may detect a neighboring device by using the threshold. For example, when the received power, the received quality, or the SINR from the device measured by the UE is larger than a predetermined threshold, it is determined that the device is a neighboring device. For example, when the received power, the received quality, or the SINR from the device measured by the UE is equal to or less than the predetermined threshold, it may be determined that the device is a device not present nearby.

For example, when the received power, the received quality, or the SINR from the device measured by the UE is larger than the predetermined threshold, it may be determined that communication can be performed with the device. For example, when the received power, the received quality, or the SINR from the device measured by the UE is equal to or less than the predetermined threshold, it may be determined that communication cannot be performed with the device.

In this manner, the UE can recognize a device capable of communication.

The UE may receive information on a device from the device. The information on the device may be information for identifying the device. For example, it may be a device identifier. The UE may measure the received power and receive the information on the device. In this manner, the UE can identify the device capable of communication.

The UE may report measurement results to the base station. The measurement results may be measurement results of the received power, the received quality, or the SINR. The UE may transmit the information on the device to the base station together with the measurement results or by way of inclusion in the measurement results. The information on the device and the measurement results of the device may be transmitted in association with each other.

As a method of transmitting the measurement results from the UE to the base station, the method of transmitting the gap configuration request or the act/deact request for the gap configuration disclosed in the second embodiment may be applied as appropriate. In this manner, the base station can acquire the received power, the received quality, and the SINR from the device measured by the UE.

The measurement results transmitted from the UE to the base station may be measurement results of all of the devices measured by the UE. For example, this is effective when the base station determines which device is present nearby the UE. The measurement results transmitted from the UE to the base station may be measurement results of a part or all of the devices measured by the UE. The measurement results of a part or all of the devices measured by the UE may be measurement results of the device(s) used for a predetermined service, for example. The base station can recognize the measurement results of the device(s) to be used for the predetermined service. The measurement results of a part or all of the devices measured by the UE may be measurement results of the device(s) determined to be present nearby by the UE or the device(s) determined to be capable of communication by the UE. The base station can acquire the measurement results of the device determined to be present nearby or capable of communication by the UE. By using the measurement results of a part or all of the devices measured by the UE as the measurement results transmitted from the UE to the base station, the amount of information to be transmitted can be reduced.

For the UE to measure the received power from the device, transmission of radio waves from the device is required. A method of transmitting radio waves from the device will be disclosed. The UE indicates the device to transmit radio waves. The UE may transmit radio wave transmission indication information to the device. The radio wave transmission indication information may be information on a radio wave transmission configuration. The device that has received the information on the radio wave transmission configuration from the UE performs transmission. The device may start transmission after a predetermined timing from reception of the information on the radio wave transmission configuration. The UE receives the transmitted radio waves from the device and thereby performs measurement.

Seven examples of the information on the radio wave transmission configuration are disclosed below.
(1) Information on the device.
(2) Transmission frequency.
(3) Transmission period.
(4) Transmission periodicity.
(5) Transmission start timing.
(6) Information for identifying the present configuration.
(7) Combination of (1) to (6).

The information on the device of (1) may be information for identifying the device. The information for identifying the device may be an identifier of the device, for example. It may be information, for example, an identifier, for identifying a device group consisting of one or a plurality of devices. It may be information on the device caused to transmit radio waves. The transmission frequency of (2) is a frequency in which the radio waves are transmitted. The transmission period of (3) is a period of time in which the radio waves are transmitted. The transmission periodicity of (4) is periodicity for transmitting the radio waves when the radio waves are periodically transmitted. (5) is information on the transmission start timing of radio waves. The information may include an offset. For example, it may be a radio frame and an offset from the start of the radio frame or a slot and an offset from the start of the slot. The device that has received the information starts transmission of radio waves at a timing indicated by the information. (6) may be an identifier, for example. By using the identifier in other messages, the radio wave transmission configuration can be identified.

A unit of information on time in the information may be a time unit, may be a symbol unit, may be a slot unit, may be a subframe unit, may be a TTI unit, or may be a radio frame unit.

The device may transmit radio waves by using the configuration.

As another method, the base station or the CN node may notify the device of the radio wave transmission indication information. The radio wave transmission indication information of the device may be notified from the base station or the CN node to the UE. The UE may notify the device of the radio wave transmission indication information of the device received from the base station or the CN node. The device that has received the information on the radio wave transmission configuration from the base station or the CN node performs transmission. The device may start transmission after a predetermined timing from reception of the information on the radio wave transmission configuration. The base station may receive the transmitted radio waves from the device and thereby perform measurement. The base station can directly measure the radio waves transmitted from the device.

The UE may receive the radio waves transmitted from the device that has received the information on the radio wave transmission configuration from the base station or the CN node and thereby perform measurement. For example, the base station or the CN node may appropriately align a transmission frequency and a transmission timing for the radio wave transmission configuration to be notified to the device and a reception frequency and a reception timing for a device measurement configuration to be notified to the UE to be described later. They may be aligned so that the UE can receive the transmitted radio waves from the device and perform measurement. In this manner, the UE can perform device measurement by using the device measurement configuration notified by the base station or the CN node.

The radio wave transmission configuration of the device may be determined in a standard or the like in advance. Processing of performing notification of the configuration from the UE or the base station to the device can be reduced. A signaling load can be reduced.

The base station may notify the UE of configuration information for radio wave transmission indication transmission. Seven examples of the configuration information for the radio wave transmission indication transmission are disclosed below.
(1) Information on the device.
(2) Transmission frequency.
(3) Transmission period.
(4) Transmission periodicity.
(5) Transmission start timing.
(6) Information for identifying the present configuration.
(7) Combination of (1) to (6).

The information on the device of (1) may be information for identifying the device. The information for identifying the device may be an identifier of the device, for example. It may be information, for example, an identifier, for identifying a device group consisting of one or a plurality of devices. It may be information on the device caused to transmit a radio wave transmission indication. The transmission frequency of (2) is a frequency in which the radio wave transmission indication is transmitted. The transmission period of (3) is a period of time in which the radio wave transmission indication is transmitted. The transmission periodicity of (4) is periodicity when the radio wave transmission indication is periodically transmitted. (5) is information on the transmission start timing of the radio wave transmission indication. An offset may be included. For example, it indicates a radio frame and an offset from the start of the radio frame or a slot and an offset from the start of the slot. Transmission of the radio wave transmission indication is started at these timings. (6) may be an identifier, for example. By using the identifier in other messages, the configuration of the radio wave transmission indication transmission can be identified.

A unit of information on time in the information may be a time unit, may be a symbol unit, may be a slot unit, may be a subframe unit, may be a TTI unit, or may be a radio frame unit.

The UE transmits the radio wave transmission indication to the device by using the configuration information received from the base station.

The base station or the CN node may notify the UE of the device measurement configuration information. 13 examples of the device measurement configuration information are disclosed below.
(1) Information on the device.
(2) Reception frequency.
(3) Reception period.
(4) Reception periodicity.
(5) Reception start timing.
(6) Measurement type.
(7) Measurement periodicity.
(8) Measurement period.
(9) Threshold.
(10) Number of devices to be detected.
(11) Report configuration.
(12) Information for identifying the present configuration.
(13) Combination of (1) to (12).

The information on the device of (1) may be an identifier of the device. It may be information, for example, an identifier, for identifying a device group consisting of one or a plurality of devices. It may be information on the device measured by the UE. The reception frequency of (2) is a frequency in which the radio waves from the device are measured. The reception period of (3) is a period of time in which the radio waves from the device are received for measurement. The reception periodicity of (4) is periodicity for receiving the radio waves when measurement is periodically performed. (5) is information on the radio wave reception start timing from the device for measurement. The information may include an offset. For example, it may be a radio frame and an offset from the start of the radio frame or a slot and an offset from the start of the slot. The device that has received the information starts reception of the radio waves at a timing indicated by the information and performs measurement. (6) indicates what is to be measured. For example, it may be received power, received quality, a SINR, or the like. (7) may be configured when the measurement using (1) to (5) is periodically performed, for example. (8) may be a measurement period of time when the measurement using (1) to (5) is performed once or a plurality of times, for example. For example, in the measurement period of time, the measurement using (1) to (5) may be periodically performed. (9) is the threshold provided to the measurement results disclosed in the above. For example, it is the threshold for the received power, the received quality, and the SINR. It may be a threshold for determining whether or not the device is present or whether or not the device is capable of communication.

(10) is the number of devices to be detected. It may be a maximum number of the devices. The number of devices to be detected can be limited, and therefore, for example, increase in buffer capacity of the UE can be moderated. (11) is a configuration for the UE to transmit the measurement results to the base station. For example, it may be information of a report timing, periodicity, whether or not a report is event-triggered, information to be reported, the number of devices to be reported, or the like. "Event-triggered" means that, for example, reporting is performed when a device exceeding the configured threshold is detected or the like. (12) may be an identifier, for example. By using the identifier in other messages, the device measurement configuration can be identified.

A unit of information on time in the information may be a time unit, may be a symbol unit, may be a slot unit, may be a subframe unit, may be a TTI unit, or may be a radio frame unit.

The UE receives the radio waves from the device by using the configuration information received from the base station. The UE receives the radio waves from the device, and thereby measures the received power, the received quality, and the SINR from the device.

The device measurement configuration may be for each device, may be for each device group consisting of one or a plurality of devices, or may be for each service using the device. The configuration appropriate for the device, the device group, and the service can be performed. As another method, the device measurement configuration may be for each UE, or may be for each one or plurality of UEs. For example, one or a plurality of geographical areas may be provided, and it may be a configuration for each group of UEs present in each of the geographical areas. The configuration appropriate for a state of the UE can be performed.

The device measurement configuration may be included in a policy or parameters of UE-device communication. The CN node may transmit the device measurement configuration to the base station as the policy or the parameters of the UE-device communication. The CN node or the base station may transmit the device measurement configuration to the UE as the policy or the parameters of the UE-device communication. For example, the device measurement configuration may be transmitted from the AF to the UE via the PCF, the AMF, and the gNB as the policy or the parameters of the UE-device communication. The UE supporting communication with the device may be provided with the policy or the parameters of the UE-device communication from the CN. By including the device measurement configuration in the policy or the parameters, the UE supporting communication with the device can acquire the device measurement configuration. For example, the service and the configuration can be associated with each other.

The device measurement configuration in the UE may be statically determined in a standard or the like. The configuration according to the identifier of the device may be used. For example, the reception start timing according to the identifier of the device may be used. The reception start timing may be derived by using the identifier of the device. A derivation method may be statically determined in a standard or the like in advance. In this manner, the UE can obtain the device measurement configuration information.

The device measurement configuration information may be included in a measurement configuration on Uu or on PC5 of the UE. It may be included in the measurement configuration performed in RRC. The device measurement configuration information may be included in an RRC message used for the measurement configuration on Uu or on PC5. For example, it may be included in a MeasConfig message. In this manner, the base station can collectively transmit the measurement configuration on Uu, the measurement configuration on PC5, and the device measurement configuration to the UE. Control can be facilitated.

The UE that has received the device measurement configuration information from the base station or the CN node measures received power and the like from the device in accordance with the configuration. The UE may detect a neighboring device or a device capable of communication. The UE transmits the measurement results to the base station in accordance with the report configuration of the configuration information. In this manner, the UE can detect a neighboring device or a device capable of communication. The UE can communicate with the device. When the base station receives the device measurement results from the UE, the base station can recognize with which device the UE can communicate. For example, the base station can transmit a communication request indication with the device used for a service and the like to the UE, and can provide the service using the device.

Time for device measurement may be provided. In the Specification, time for device measurement may be referred to as a gap for device measurement. There may be one or a plurality of gaps for device measurement. Regarding the gap for device measurement, the method for the gap for UE-device communication disclosed in the second embodiment may be applied as appropriate. This concerns, for example, for each what the gap for device measurement is provided, a method of configuring the gap for device measurement, a method of requesting a gap configuration for device measurement, information on the gap configuration for device measurement, and the like. The UE may perform measurement of a device in the gap configured for device measurement. For example, received power and the like from the device may be measured. By using the measurement results, the UE may detect a neighboring device or a device capable of communication. The base station may transmit the gap configuration for device measurement to the UE.

In this manner, for example, even when UE-device communication is performed in a frequency different from that for communication on Uu between the UE and the base station, the UE can perform device measurement by changing frequencies in the gap for device measurement.

The configuration information of the gap for device measurement may be included in the device measurement configuration information. The base station may notify the UE of the configuration information of the gap for device measurement by including the configuration information of the gap for device measurement in the device measurement configuration information. As a method of configuring the device measurement configuration information and a method of requesting the device measurement configuration information, the methods for the gap for UE-device communication disclosed in the second embodiment may be applied as appropriate. In this manner, the amount of signaling can be reduced. For example, in the device measurement configuration, the gap for device measurement used for device measurement may be configured. For the sake of correspondence of each configuration, an identifier provided to each configuration may be used. For example, the configuration of device measurement appropriate for a state of radio resource use and a state of radio wave propagation can be performed.

The base station may perform a reconfiguration of the gap for device measurement for the UE. The base station may perform a change of the gap configuration for device measurement for the UE. When the base station performs a change of the gap configuration for device measurement for the UE, the base station may perform notification of a part or all of information on the configuration. As a part of the information on the gap configuration, for example, only information to be changed may be notified. As a method of reconfiguring and changing the gap from the base station to the UE, the gap configuration method may be applied as appropriate.

When the gap configuration for UE-device communication and the gap configuration for device measurement overlap, the gap configuration for UE-device communication may be prioritized. The overlapping gap configuration for device measurement may be disabled. The UE-device communication can be prioritized. For example, communication with the device used for an urgent or important service can be preferentially performed. Reduction in quality of a communication service using the device can be moderated. Only overlapping time in the gap configuration may be disabled. For example, fine control can be performed, such as allowing device measurement to be performed in non-overlapping time. As another method, the entire overlapping gap configuration may be disabled. For example, control can be facilitated.

When the gap configuration for UE-device communication and the gap configuration for device measurement overlap, the gap configuration for device measurement may be prioritized. The overlapping gap configuration for UE-device communication may be disabled. For example, when device measurement has not been performed yet and presence of a device capable of communication cannot be recognized, device measurement can be performed. Only overlapping time in the gap configuration may be disabled. For example, fine control can be performed, such as allowing UE-device communication to be performed in non-overlapping time. As another method, the entire overlapping gap configuration may be disabled. For example, control can be facilitated.

The gap for device measurement may be used for UE-device communication. When UE-device communication has occurred in the gap for device measurement, device measurement may be stopped or suspended. Device measurement is stopped or suspended, and UE-device communication is performed. When UE-device communication is to occur or has occurred, the gap configuration for device measurement may be used for the UE-device communication. For example, the gap for device measurement immediately after UE-device communication has occurred may be used. The communication service using the device can be provided with low delay.

Device measurement may be stopped or suspended while UE-device communication is performed. Device measurement may be resumed after communication end. Efficient control with respect to time can be performed. As another method, when UE-device communication has occurred in the gap for device measurement, subsequent device measurement may be stopped or suspended. Control can be facilitated.

The gap for UE-device communication may be used for device measurement. For example, when UE-device communication is not performed in the configured gap for UE-device communication, device measurement may be performed in the gap. For example, in the configured gap for UE-device communication, device measurement and UE-device communication may be continuously performed. Device measurement and UE-device communication can be performed in one gap, and therefore detection of a device capable of communication to communication with the device can be performed with low delay.

A processing method when the gap configuration for UE-device communication and the gap configuration for device measurement overlap, a processing method when UE-device communication has occurred in the gap for device measurement, and a device measurement processing method in the gap for UE-device communication may be configurable. A NW node (which need not be limited to a node and may be a function) may notify the UE of the configuration. For example, it may be transmitted as the gap configuration information for UE-device communication. For example, it may be transmitted as the gap configuration information for device measurement. In this manner, a configuration of processing can be changed according to a service using the device. The configuration appropriate for the service can be performed.

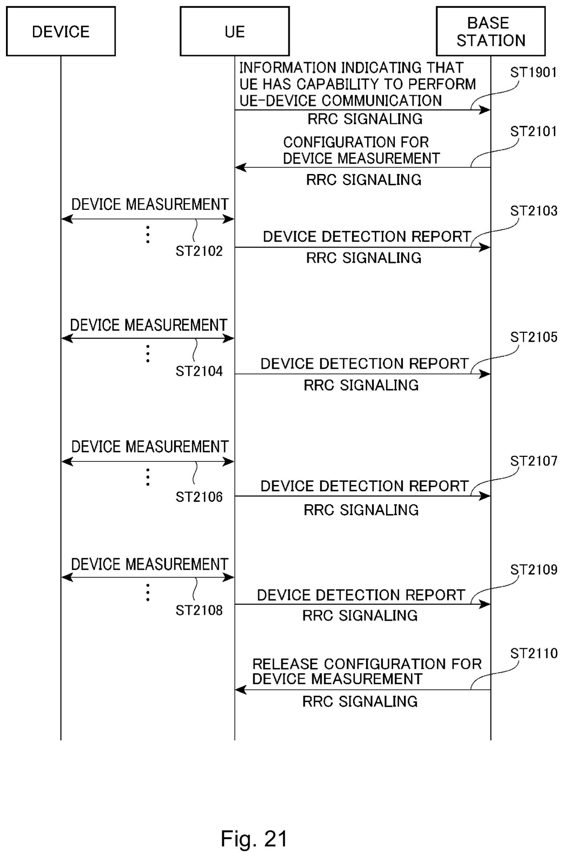

Fig. 21 is a diagram illustrating a sequence example of the gap configuration for device measurement. The steps common to those of Fig. 19 and Fig. 20 are denoted by the same step numbers, and common description is omitted. In Step ST2101, the base station transmits a configuration for device measurement to the UE. The configuration for device measurement may include one or a plurality of gap configurations for device measurement. For the transmission, for example, RRC signaling may be used. In Step ST2102, the UE that has received the configuration for device measurement performs measurement of a device by using the configuration information. In Step ST2103, the UE transmits device measurement results to the base station. Device detection results may be transmitted as a device detection report. For the transmission, for example, RRC signaling may be used.

Device measurement may be periodically performed, for example. Device measurement may be performed by using device measurement periodicity present in the configuration information for device measurement. The UE performs device measurement in Steps ST2102, ST2104, ST2106, and ST2108. The UE transmits the results obtained by performing device measurement in Steps ST2102, ST2104, ST2106, and ST2108 to the base station in Steps ST2103, ST2105, ST2107, and ST2109, respectively. The device detection results may be transmitted.

Transmission of the device measurement results from the UE to the base station need not be performed for each device measurement. For example, the device measurement results may be transmitted only when a neighboring device is detected. For example, the device measurement results may be transmitted according to trigger-based information present in the device measurement configuration information. For example, one or a plurality of device measurement results may be collectively transmitted in one device detection report. In this manner, the amount of signaling between the UE and the base station can be reduced.

In Step ST2110, the base station may perform release of the configuration for device measurement for the UE. The UE releases the configuration for device measurement. In this manner, the UE no longer needs to retain the configuration even when device measurement is not performed, and therefore, for example, capacity of the buffer and the like can be reduced.

When UE-device communication is performed, for example, the sequence disclosed in Fig. 19 or Fig. 20 may be performed. For example, in Step ST2104, the UE performs measurement of a device, and detects a device capable of communication from the measurement results. In such a case, the processing of Steps ST1903 to ST1908 of Fig. 19 may be performed after Step ST2104. Step ST1902 of Fig. 19 may be transmitted from the base station to the UE in advance. For example, it may be transmitted after Step ST1901. By performing device measurement and detecting a device capable of communication, the UE can securely perform UE-device communication.

As another example, for example, in Step ST2105, the base station receives the device detection results from the UE. The base station determines communication with the device for the UE by using the information. In such a case, the processing of Steps ST2001 to ST1908 of Fig. 20 may be performed after Step ST2105. By detecting a device capable of communication with the UE, the base station can perform communication with the device via the UE.

When UE-device communication is performed, device measurement may be suspended. For example, this is effective when the UE does not have capability to simultaneously perform UE-device communication and device measurement. When UE-device communication is performed, device measurement need not be suspended. For example, this is effective when the UE has capability to simultaneously perform UE-device communication and device measurement.

When UE-device communication is performed, the UE may perform measurement by using a communication signal from the device. Even when device measurement using the device measurement configuration is suspended due to UE-device communication, the UE can measure the device with which communication is performed. The UE may transmit measurement results of the device with which communication is performed to the base station. As a method of transmission from the UE to the base station, the method disclosed in the above may be applied as appropriate.

When the UE performs measurement by using a communication signal from the device and the communication signal from the device has predetermined received power (which may be received quality or SINR) or less, for example, the UE may disable communication with the device. The predetermined value may be statically determined in a standard or the like in advance, or may be notified from the base station. Control can be performed in which UE-device communication control and device measurement are associated with each other.

By employing the method as disclosed in the present embodiment, the UE and the base station can recognize that a device is present nearby. The UE and the base station can recognize that a device capable of communication is present. Thus, the UE and the base station can perform communication with such a device. The base station can recognize a device present near the UE or a device capable of communication with the UE. The base station can perform a communication request with such a device for the UE. This allows a device to be introduced into the mobile communication system for providing a service using the device.

In the gap for device measurement, the UE need not perform communication and processing between the UE and a UE or the base station. By configuring the gap for device measurement, for example, even when the device measurement is performed in a frequency different from that for communication between the UE and a UE or the base station, the UE can perform the device measurement by changing frequencies in the gap for device measurement. The device measurement and communication between the UE and a UE or the base station can be made to coexist. By configuring the gap for device measurement, for example, interference between device measurement and communication between the UE and a UE or the base station can be avoided. High-quality and stable communication can be provided between the UE and the device and between the UE and a UE or the base station.

By configuring the gap having a predetermined period for device measurement, for example, even when communication methods, reference timings, and the like are different between transmission from the device and communication on Uu or PC5, the device measurement can be performed in the period of the gap.

When the gap for device measurement and a SIB transmission timing overlap, the UE may prioritize SIB reception. When the gap for device measurement and a specific SIB transmission timing overlap, the UE may prioritize the specific SIB reception. The specific SIB may be a SIB including emergency information and alarm information. Examples of the emergency information and the alarm information include the ETWS, the CMAS, and the like. In this manner, even when the gap for UE-device communication is configured, the UE can receive the emergency information and the alarm information.

When the gap for device measurement and a UCI transmission timing overlap, the UE may prioritize UCI transmission. When the gap for device measurement and a transmission timing of specific UCI overlap, the UE may prioritize transmission of the specific UCI. The specific UCI may be an SR. In this manner, the UE can start communication with the base station at an early time.

When the gap for device measurement and a paging reception timing overlap, the UE may prioritize paging reception. In this manner, the UE can start communication with the base station at an early time.

The base station may perform device measurement. The base station may receive radio waves transmitted from a device and perform measurement. As a device measurement method performed by the base station, a method disclosed in the device measurement method performed by the UE described above may be applied as appropriate. The base station may detect a neighboring device. The base station may detect a device capable of communication. As a device detection method performed by the base station, a method disclosed in the device detection method performed by the UE described above may be applied as appropriate.

The CU may notify the DU of information on the information on the device measurement configuration. The DU can perform device measurement. The CU may notify a radio unit (RU) of the information on the device measurement configuration. The CU may notify the RU of the information on the device measurement configuration via the DU. The RU can perform device measurement.

The base station may detect a device present near the UE. The base station may detect a device capable of communication with the UE. The base station may use a report of device measurement results from the UE for the detection. The base station may use device measurement results in the base station for the detection.

The base station may derive location information of a device present near the UE. The base station may use location information of the UE present near the device to derive the location information of the device.

The base station may notify the UE of a detected device. The base station may notify the UE of information on the detected device. The base station may notify another UE of the device detected by the UE. The base station may notify another UE of information on the device detected by the UE. The information on the device may be information for identifying the device, for example. For example, it may be a device identifier. Although the above has disclosed performing notification of the detected device, notification of measurement results of the device may be performed. Notification of the measurement results of the device together with detection results of the device may be performed. The measurement results of the device may be included in the information on the device. In this manner, the UE can recognize a neighboring device. The UE can recognize a device capable of communication.

The UE may notify surrounding UEs of the detected device. The UE may notify surrounding UEs of the information on the detected device. For the notification, a PC5 interface may be used. Direct notification can be performed between UEs. In this manner, the UE can recognize a device present nearby.

The base station may determine the device to be communicated by the UE. For the determination, the base station may use information of the device capable of communication received from the UE. The base station notifies the UE of the information on the device to be communicated with. There may be one or a plurality of such devices. The base station transmits the information on the device to be communicated by the UE to the UE. The information on the device to be communicated by the UE may be information for identifying the device, for example, an identifier of the device. The information on the device to be communicated by the UE may be received power from the device in the UE, for example. It may be a predetermined value of the received power. For example, it may be a threshold. For example, the device whose received power in the UE exceeds the threshold and the UE may perform communication. The information for identifying the device may be a distance between the UE and the device, for example. It may be a predetermined value of the distance. For example, it may be a threshold. For example, the device whose distance between the UE and the device is equal to or less than the threshold and the UE may perform communication.

The base station may notify the UE of the information on the device to be communicated by the UE together with the gap configuration information for UE-device communication or by way of inclusion in the information. The base station may notify the UE of the information on of the device communicated by the UE and the gap configuration for UE-device communication in association with each other. It may be notified as the gap configuration for communication with the device to be communicated by the UE.

In this manner, by allowing the base station to determine the device to be communicated by the UE, the base station can manage the UE and the device to perform UE-device communication. For example, when many UEs and devices perform UE-device communications, interference between the communications can be reduced. Communication quality of the UE-device communication can be enhanced.

The base station may notify surrounding base stations of information on the device measurement period configured for the UE. The base station may transmit the information on the device measurement period configured for the UE to a HO target base station (target gNB) in HO processing of the UE. The information may be transmitted by using an inter-base station interface. For example, it may be transmitted by using Xn signaling. For example, the configuration information may be included in a HANDOVER REQUEST message to be transmitted. The HO target base station performs the device measurement configuration for the UE. For the configuration, information on the device measurement configuration of the UE received from a HO source base station (source gNB) may be used. It may be the same configuration, or may be a partially or entirely different configuration.

The HO target base station transmits the device measurement configuration of the UE to the UE. The HO target base station may transmit information on the configuration to the HO source base station. The HO source base station transmits the information on the configuration to the UE. Transmission of the information on the configuration from the HO target base station to the HO source base station may be transmitted by using an inter-base station interface. For example, it may be transmitted by using Xn signaling. For example, the configuration information may be included in a HANDOVER REQUEST ACKNOWLEDGE message to be transmitted. Transmission of the information on the configuration from the HO source base station to the UE may be transmitted by using RRC signaling. For example, the configuration information may be included in an RRCReconfiguration message to be transmitted.

In this manner, even when the UE moves between base stations, the device measurement configuration can be acquired in the HO target base station, and the device measurement can be performed by using the configuration.

The method disclosed in the present embodiment may be applied to Minimization of Drive Tests (MDT) (NPL 37). The device measurement results in the UE may be applied to MDT. As the measurement results in MDT, the device measurement results in the UE may be included. Not only the device measurement results in the UE but the device detection results in the UE may be included as well. Location information of the UE that has performed measurement of the device may be included. When the UE derives the location information of the device, the location information of the device may be included.

The method disclosed in the present embodiment may be applied to a trace function (NPL 38). The trace function may include the device measurement results in the UE. It may include not only the device measurement results in the UE but the device detection results in the UE as well. Location information of the UE that has performed measurement of the device may be included. When the UE derives the location information of the device, the location information of the device may be included. The base station may perform device measurement, and the MDT and the trace function may include the device measurement results in the base station or the device detection results in the base station.

In this manner, by introducing the device measurement results into the MDT and the trace function, the base station and the NW node can manage a distribution state and a detection state of devices. Devices can be introduced into the mobile communication system of 3GPP.

### Fourth Embodiment

In 3GPP, to introduce devices into the mobile communication, it is proposed that communication is performed between a UE and a device. It is also proposed that the device performs communication with a NW (RAN, CN) via the UE. However, no disclosures have been made on a state of the UE that performs communication with the device. When the state of the UE is unknown, what type of communication can be performed with the device is unknown, and thus the device cannot be introduced into the mobile communication system.

In the present embodiment, a method for solving such a problem will be disclosed.

As RM states of the UE, the UE has RM-REGISTERED and RM-DEREGISTERED (NPL 10).

In RM-REGISTERED, the UE is capable of performing UE-device communication. In RM-REGISTERED, the UE may be capable of performing device-NW communication via the UE. In RM-REGISTERED of the UE, the device may be capable of performing communication with the CN via the UE and the RAN. In RM-REGISTERED, the UE may be capable of performing UE-device communication and/or device-NW communication via the UE by using the UP and/or the CP. The CP may be a part or all of the NW nodes (which may be functions) of the CP. The communication may be data communication. The communication may be communication of information necessary for communication with the device. The UE may transmit data received from the device in UE-device communication to the NW. Alternatively, the UE may transmit data received from the NW to the device in UE-device communication.

Information necessary for UE-device communication may be provided. The UE can perform UE-device communication by acquiring the information. Information necessary for device-NW communication via the UE may be provided. Regarding the information necessary for device-NW communication via the UE, the information necessary for UE-device communication may be applied as appropriate. For example, "for UE-device communication" may be replaced with "for device-NW communication via the UE".

The information necessary for UE-device communication may be transmitted from the CN node to the UE. It may be transmitted to the UE via the base station. It may be provided to the UE by the PCF. The information stored in the PCF can be provided to the UE. The information stored in the PCF may be updated. Thus, the latest information can be provided to the UE. As another method, the information may be provided from an application server via the PCF. It may be provided by using an interface between the UE and the application server. In the application server, the information may be updated. Information appropriate for an application using the device can be provided to the UE.

The information may be preconfigured in a subscriber identity module (SIM). As another method, the information may be preconfigured in the UE. In this manner, the need for processing for providing the information can be eliminated. A signaling load can be reduced.

A method of providing the information to the UE and a method of preconfiguring the information in the SIM or in the UE may be used together. They may be used in combination. In this case, an issue arises as to information obtained in which method is to be used by the UE. A priority may be provided to the method used to obtain the information, and the information may be used in accordance with the priority. For example, the priority of the information preconfigured in the UE is set low, and the priority of the information provided from another node, such as the PCF and the application server, is set high. In the PCF and the application server, the information is updated as required and the information appropriate for a service is configured, and thus the UE can acquire more appropriate information.

The information provided from the PCF may have a higher priority than the information provided from the application. In the PCF, the information is updated as required, and thus the latest information can be obtained. The information preconfigured in the SIM may have a higher priority than the information preconfigured in the UE. The information in the SIM may be rewritten as appropriate, and thus more appropriate information can be obtained.

The UE may request the CN node to provide the information necessary for UE-device communication. The CN node may be the AMF, for example. The UE may transmit the request to the CN node via the base station. The AMF that has received the request may request the PCF to provide the information necessary for UE-device communication of the UE. The PCF that has received the request may perform processing of providing the information necessary for UE-device communication to the UE. The UE performing communication with the device can be provided with the information necessary for communication with the device from the CN node.

The UE may transmit information on provision of the information necessary for communication with the device to be described later to the CN node together with the request to provide the information necessary for UE-device communication or by way of inclusion in the request. The CN node that has received the information can recognize for which device the request to provide the information necessary for communication is performed, for example.

Registration processing may be used to provide the information necessary for communication with the device to the UE. In the registration processing of the UE, the base station or the CN node transmits the information necessary for UE-device communication to the UE. The CN node may perform transmission to the UE via the base station. The UE can receive the information necessary for communication with the device. The UE may perform communication with the device by using the information. In this manner, for example, the need for registration processing of the device for providing the information to the UE can be eliminated.

The UE may include information indicating that the UE has the capability to perform communication with the device in the registration request message. A UE capability including the information may be included. The CN node that has received the information, for example, the AMF, selects a PCF that supports provision of the information necessary for UE-device communication. The AMF establishes UE policy association with the PCF for distribution of the information necessary for UE-device communication. The AMF that has received the information from the UE may report the information to the selected PCF. The PCF determines the information necessary for UE-device communication by using the information.

When the UE supports UE-device communication but does not have valid information necessary for UE-device communication, the UE may include a policy container indicating a request to provide the information necessary for UE-device communication in the registration processing. When the UE indicates the request to provide the information necessary for UE-device communication in the policy container, the PCF determines whether or not to provide the information necessary for UE-device communication. The PCF provides the information necessary for UE-device communication to the UE.

The above description has disclosed UE-device communication. Device-NW communication via the UE may be used. Although the above describes the information necessary for UE-device communication, information necessary for device-NW communication via the UE may be used. Examples of the information necessary for UE-device communication include a policy for UE-device communication, information on a service using UE-device communication, information on a NW capable of UE-device communication, and the like.

24 examples of the information necessary for UE-device communication are disclosed below.
(1) Authorization policy.
(2) PLMN(s) capable of communication. There may be one or a plurality of PLMNs.
(3) State of the UE capable of communication.
(4) RAT(s) capable of communication. There may be one or a plurality of RATs.
(5) Whether or not the UE is served by NR.
(6) Radio parameters. For example, radio parameters of a RAT between the UE and the device. For example, a frequency band or the like. For example, it may be information indicating whether or not the radio parameters are managed by an operator.
(7) UE-device communication selection policy. For example, it may be service-related information for performing UE-device communication.
(8) Privacy-related policy/parameters.
(9) Policy/parameters for UE-device communication. The parameters may be various pieces of configuration information.
(10) Association information with a service. For example, association information between a service and a frequency. For example, association information between a service and a communication mode. For example, association information between a service and a target device. For example, it may be an identifier.
(11) QoS parameter association information for a service and UE-device communication. For example, it may be a QoS parameter for device data communication between the device and the NW via the UE. For example, it may be a QoS parameter for device data communication between the UE and the NW.
(12) AS layer configuration. For example, an AS layer configuration for device data communication between the UE and the NW. For example, association information for RBs for device data communication between the UE and the NW. For example, QoS profile information including a QoS parameter. For example, QoS characteristics relating to a priority level. For example, an averaging window, a data burst volume, and the like.
(13) Validity timer for a policy/parameters. For example, expiration time of the policy/parameters.
(14) Information on a geographical area. It may be associated with other information.
(15) PDU session type to which a service is mapped. For example, information indicating whether it is an IP type or an Unstructured type.
(16) Transport layer protocol. For example, whether it is UDP or TCP.
(17) Session and service continuity (SSC) mode.
(18) Information on slicing. For example, one or a plurality of S-NSSAIs.
(19) One or a plurality of data network names (DNNs).
(20) Validity timer for a policy/parameters. For example, expiration time of the policy or the parameters.
(21) Application server address information to which a service is mapped. For example, an IP address/fully qualified domain name (FQDN). For example, a port number of a transport layer.
(22) List of one or a plurality of FQDNs or application server IP addresses related to geographical area information.
(23) List of one or a plurality of PLMNs to which the configuration is applied.
(24) Combination of (1) to (23).

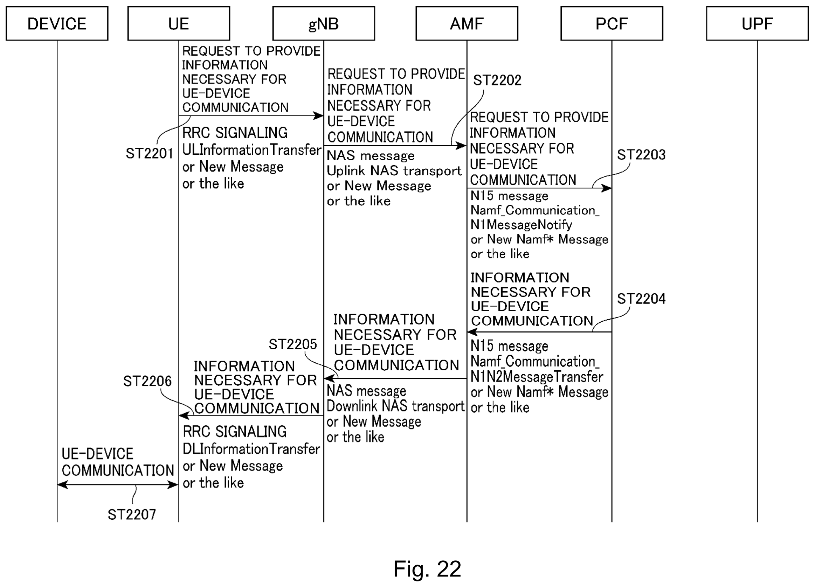

Fig. 22 is a diagram illustrating a sequence example in which the information necessary for UE-device communication is provided to the UE. In Step ST2201, the UE transmits a request to provide the information necessary for UE-device communication to the base station. For the request, RRC signaling may be used. For example, the request may be included in an RRC message. For example, it may be included in a ULInformationTransfer message. Alternatively, a new RRC message may be provided for the request to provide the information necessary for UE-device communication. The request may be included in a NAS message to be transmitted by using RRC signaling.

In Step ST2202, the base station transmits the request to provide the information necessary for UE-device communication to the AMF. For transmission of the request, a NAS message may be used. For example, the request may be included in an Uplink NAS transport message. Alternatively, a new NAS message may be provided for the request to provide the information necessary for UE-device communication.

In Step ST2203, the AMF transmits the request to provide the information necessary for UE-device communication to the PCF. For the request, N15 signaling may be used. For example, the request may be included in an Namf_Communication_N1MessageNotify message. Alternatively, a new message may be provided for the request to provide the information necessary for UE-device communication.

The PCF that has received the request determines the information necessary for UE-device communication of the UE that has transmitted the request. The request may include an identifier of the UE. By acquiring the identifier of the UE included in the request, the PCF can easily identify the UE that has transmitted the request. The PCF that has received the request may determine for which device the information is necessary for communication. Pieces of information necessary for UE-device communication may be made different for each of one or a plurality of devices, and this is effective in such a case.

In Step ST2204, the PCF transmits the information necessary for UE-device communication to the AMF. For transmission of the information, N15 signaling may be used. For example, the information may be included in an Namf_Communication_N1N2MessageTransfer message. Alternatively, a new message may be provided for provision of the information necessary for UE-device communication.

In Step ST2205, the AMF transmits the information necessary for UE-device communication to the base station. For transmission of the information, a NAS message may be used. For example, the information may be included in a Downlink NAS transport message. Alternatively, a new NAS message may be provided for provision of the information necessary for UE-device communication.

In Step ST2206, the base station transmits the information necessary for UE-device communication to the UE. For transmission of the information, RRC signaling may be used. For example, the information may be included in an RRC message. For example, the information may be included in a DLInformationTransfer message. Alternatively, a new RRC message may be provided for provision of the information necessary for UE-device communication. The information may be included in a NAS message to be transmitted by using RRC signaling.

In this manner, the UE can acquire the information necessary for UE-device communication. In Step ST2207, the UE may perform communication with the device by using the information.

In Step ST2206, the UE that has received the information necessary for UE-device communication may transmit information indicating that the information has been received to the AMF. The information indicating that the information necessary for UE-device communication has been received may be information indicating that the UE has configured the information necessary for UE-device communication having been received. The information may be transmitted from the UE to the base station, and then transmitted from the base station to the AMF. The AMF that has received the information may transmit the information to the PCF. The PCF can recognize that the UE has received the information necessary for UE-device communication having been provided. The PCF can recognize the latest information necessary for UE-device communication.

Service request processing may be used to provide the information necessary for communication with the device to the UE. For example, when the UE is not in CM-CONNECTED, the service request processing may be performed. For example, in Fig. 22, the UE may initiate the service request processing and perform the service request processing before performing the request to provide the information necessary for UE-device communication of Step ST2201. For example, in Fig. 22, the AMF that has received the information necessary for UE-device communication in Step ST2204 may initiate the service request with the UE and perform the service request processing. The UE can acquire the information necessary for UE-device communication from the AMF.

After the AMF has provided the information necessary for communication with the device to the UE, the UE need not transition to CM-CONNECTED. For example, when the service request processing is performed for provision of the information necessary for UE-device communication, the CM-IDLE state may be maintained without transitioning to CM-CONNECTED. In the service request processing, the UE may transmit information on provision of the information necessary for communication with the device to be described later to the NW node. The NW node that has received the information may maintain the UE in the CM-IDLE state. For example, memory usage in the UE can be reduced.

The above description has disclosed that the UE in RM-REGISTERED may perform UE-device communication and/or device-NW communication via the UE in the CP. Next, a method of communicating device data in the CP will be disclosed. The device data may be included in a NAS message. For example, the device data may be included in an initial UE message to be transmitted. By using a NAS message, device data transmission can be performed between the UE and the AMF being a CN node. As a device data communication method between the AMF and an AF or an application server (AS) for UE-device communication, a method disclosed regarding a case in which the UE is in RM-DEREGISTRED to be described later may be applied as appropriate. In this manner, the device data can be communicated in the CP.

The base station may directly perform device data communication with an NF for device data communication. The NF for device data communication may include a proxy function between the base station and the AF or the AS. A method in which the base station directly performs device data communication with the NF for device data communication to be disclosed later may be applied as appropriate. In this manner, CN nodes such as the AMF, the SMF, and the UPF can be omitted, and therefore device data communication can be performed at an early time and with ease.

The service request processing may be used for communication of the device data. The UE in RM-REGISTERED may use the service request processing for communication of the device data. In this manner, data communication for a service using the device can be performed.

In RM-DEREGISTERED, the UE is capable of performing only UE-device communication. In RM-REGISTERED, the UE may be incapable of performing device-NW communication via the UE. In RM-DEREGISTERED, the UE may be capable of performing UE-device communication in the UP and/or the CP. The communication may be data communication. The communication may be communication of information necessary for data communication.

In RM-DEREGISTERED, the UE may be capable of performing device-NW communication via the UE. A method for enabling the communication will be disclosed. For the communication, registration processing is used. The device data may be included in a registration request message.

For device data communication, the UE may notify the NW of information on device data communication. 12 examples of the information are disclosed below.
(1) Information indicating that it is for device-NW data communication.
(2) Information for identifying the device.
(3) Information indicating that the UE has the capability to perform communication with the device. It may be a UE capability.
(4) Information on a RAT for UE-device communication.
(5) Information indicating whether or not header compression is supported.
(6) Information indicating whether transmission is performed from the base station to the UPF or to the AMF.
(7) Information indicating whether transmission is performed from the UPF to the AF or the NEF.
(8) Information indicating whether transmission is performed from the UPF to the AS (which may be the DN) or to the AF (which may be the NEF).
(9) Information indicating whether transmission is performed from the SMF to the UPF or to the AF (which may be the NEF).
(10) Information indicating whether transmission is performed from the UPF to the base station or to the SMF.
(11) Information as to whether or not device-NW data communication using the method disclosed herein is supported.
(12) Combination of (1) to (11).

By including the information in the registration request message, the NW node that has received the registration request message can recognize that the registration request is for the communication.

The device data may be included in a NAS message. For example, it may be included in an initial UE message to be transmitted. The information to be included in the registration request message for the communication described above may be included in a NAS message. For example, it may be included in an initial UE message to be transmitted. By using a NAS message, transmission can be performed from the UE to the AMF being a CN node.

The AMF may determine whether the UE performing the communication has device data communication authorization. The AMF receives subscription information of the UE from the UDM or the PCF in advance. The AMF may receive the subscription information of the UE in the registration processing from the UE. The AMF may store the subscription information of the UE. The AMF may store the subscription information even when the UE is in RM-DEREGISTERED.

When the UE has the device data communication authorization, the AMF determines that device-NW communication via the UE can be performed. When there is no device data communication authorization, it is determined that device-NW communication via the UE cannot be performed.

When the UE has the device data communication authorization, the AMF transmits the device data received from the UE to the SMF. The SMF transmits the received device data to the UPF. The UPF transmits the received device data to a data network (DN) or an AS. The AS may be an AS for UE-device communication. The UPF may transmit the received device data to the AF via the NEF, or may directly transmit the received device data to the AF. When the AF is a reliable NW, direct transmission to the AF may be performed. A signaling load can be reduced. The SMF that has received the device data from the AMF may transmit the device data to the AF via the NEF, or may directly transmit the device data to the AF. When the AF is a reliable NW, direct transmission to the AF may be performed. A signaling load can be reduced. The AMF may transmit the device data to the AF via the NEF, or may directly transmit the device data to the AF. When the AF is a reliable NW, direct transmission to the AF may be performed. A signaling load can be reduced.

When the UE does not have the device data communication authorization, the AMF may notify the UE of a reject message. It may be notified from the AMF to the UE via the base station. Cause information may be included in the reject message. Examples include device data communication impossible and the like. As the reject message, a registration reject message may be used. In the registration processing, the UE can be notified of the reject message.

The above description has disclosed that the AMF determines whether the UE performing communication of the device data has the device data communication authorization. Another NW node may determine whether there is authorization. The NW node that determines the authorization may receive the subscription information of the UE from the UDM or the PCF in advance. As another NW node, for example, a RAN may be used. As the RAN, a base station may be used, or a CU of the base station may be used. By performing the authorization in the RAN, the authorization can be performed when the UE accesses the RAN, and therefore determination can be performed at an early time.

In this manner, the UE can transmit the device data to the NW.

After the device data has been communicated, the UE need not transition to RM-REGISTERED. In a case of the registration processing for the communication, the UE need not transition to RM-REGISTERED. In this manner, in RM-DEREGISTERED, the UE can perform communication of the device data.

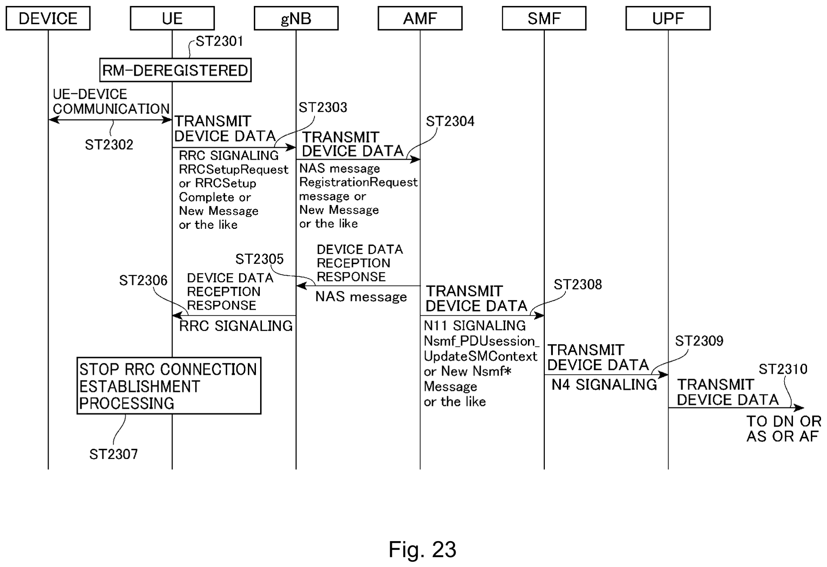

Fig. 23 is a diagram illustrating a sequence example in which the UE performs device-NW communication via the UE in RM-DEREGISTERED. It illustrates a case in which this is initiated by the UE. It illustrates a case in which transmission of device data is performed from the UE. In Step ST2301, the UE is in the RM-DEREGISTERED state. In Step ST2302, communication is performed between the UE and the device. The UE receives device data. In Step ST2303, the UE transmits the device data to the base station. The UE may transmit the information on device data communication to the base station. For the transmission, RRC signaling may be used. For example, RRC connection establishment processing may be used. For example, the device data may be included in an RRCSetupRequest message to be transmitted. Alternatively, a new RRC message may be provided for device data transmission. The information may be included in a NAS message to be transmitted by using RRC signaling.

The base station that has received the device data may determine whether or not to transmit the device data to the AMF by using the information on device data communication. For example, when it is for device-NW data communication, in Step ST2304, the base station transmits the device data to the AMF. The base station may transmit the information on device data communication to the AMF. For the transmission, a NAS message may be used. For example, the device data may be included in a Registration Request message to be transmitted. Alternatively, a new message may be provided for device data transmission.

In Step ST2305, the AMF that has received the device data may transmit a device data reception response to the base station. For the transmission, a NAS message may be used. In Step ST2306, the base station transmits the device data reception response to the UE. For the transmission, RRC signaling may be used. The response may be included in a NAS message to be transmitted by using RRC signaling. In this manner, the UE can recognize that the device data has been transmitted to the AMF. A function of retransmitting the device data by the UE may be provided. When the UE receives the device data reception response, the UE does not retransmit the device data. When the UE does not receive the device data reception response, the UE retransmits the device data. When the UE receives the device data reception response, in Step ST2307, the UE may stop the RRC connection establishment processing. Alternatively, processing initiated to transmit the device data may be stopped. In this manner, after device data transmission, the UE can be restored to the state before transmission.

The AMF that has received the device data may determine whether or not to transmit the device data to the SMF by using the information on device data communication. For example, when it is for device-NW data communication, in Step ST2308, the AMF transmits the device data to the SMF. The AMF may transmit the information on device data communication to the SMF. For the transmission, N11 signaling may be used. For example, the device data may be included in an Nsmf_PDUsession_UpdateSMContext message to be transmitted. Alternatively, a new message may be provided for device data transmission.

The SMF that has received the device data may determine whether or not to transmit the device data to the UPF by using the information on device data communication. For example, when it is for device-NW data communication, in Step ST2309, the SMF transmits the device data to the UPF. The SMF may transmit the information on device data communication to the UPF. For the transmission, N4 signaling may be used. A new message may be provided for device data transmission.

In Step ST2310, the UPF that has received the device data transmits the device data to the AF or the AS. The UPF that has received the device data may determine whether to transmit the device data to the AF or transmit the device data to the AS by using the information on device data communication. A new network function (NF) may be provided for device data communication. The UPF may transmit the device data to the AF via the NEF or the NF. The UPF may determine to which NF the device data is to be transmitted by using the information on device data communication. The UPF transmits the device data to the determined NF. The NEF or the NF may transmit the device data received from the UPF to the AF. The UPF may transmit the information on device data communication to the determined AF or AS.

The above has disclosed that the base station performs device data communication with the NF for device data communication via the AMF, the SMF, and the UPF. As another method, the base station may directly perform device data communication with the NF for device data communication. The NF for device data communication may include a proxy function between the base station and the AF or the AS. In this manner, CN nodes such as the AMF, the SMF, and the UPF can be omitted, and therefore device data communication can be performed at an early time and with ease.

Information as to whether or not the device data has ended may be provided. For example, the UE may generate the information. The UE may notify the CN node of the information as to whether or not the device data has ended. The UE may transmit the information to the base station, and the base station may transmit the information to the CN node. The information may be transmitted together with the device data, or the information may be transmitted separately from the device data. In this manner, the CN node that has received the information can recognize that the device data transmitted from the UE has ended.

After the device data has been communicated, the UE does not transition to RM-REGISTERED. For example, the UE may determine not to transition to RM-REGISTERED upon transmission end of the device data. The UE maintains RM-DEREGISTERED after transmission end of the device data. For example, the UE may determine not to transition to RM-REGISTERED upon reception of the device data reception response of Step ST2306. The UE maintains RM-DEREGISTERED.

After the device data has been communicated, the CN node does not transition the state of the UE to RM-REGISTERED. For example, the CN node may determine not to transition the state of the UE to RM-REGISTERED upon transmission end of the device data. The CN node maintains the state of the UE after transmission end of the device data in RM-DEREGISTERED. For example, the CN node may determine not to transition the state of the UE to RM-REGISTERED upon transmission of the device data reception response of Step ST2305. The state of the UE is maintained in RM-DEREGISTERED.

Even when the registration processing is used for transmission of the device data, the UE and the CN node can maintain the state of the UE in RM-DEREGISTERED.

In this manner, in RM-DEREGISTERD, the UE can transmit the device data from the device to the AF or the AS via the UE itself.

The registration processing may be used to provide the information necessary for communication with the device to the UE in RM-DEREGISTERED. After the information necessary for communication with the device has been provided, the UE need not transition to RM-REGISTERED. In a case of the registration processing for communication for provision, the UE need not transition to RM-REGISTERED. In this manner, in RM-DEREGISTERED, the UE can acquire the information necessary for communication with the device. Thus, the UE can perform UE-device communication even in RM-DERGISTERED. The UE can perform device-NW communication via the UE even in RM-DERGISTERED.

To provide the information necessary for communication with the device, the UE may notify the NW of information on provision of the information necessary for communication with the device. 12 examples of the information are disclosed below.
(1) Information indicating that it is for provision of the information necessary for communication with the device. It may be information indicating the request to provide the information necessary for communication with the device.
(2) Information for identifying the device.
(3) Information indicating that the UE has the capability to perform communication with the device. It may be a UE capability.
(4) Information on a RAT for UE-device communication.
(5) Information indicating whether or not header compression is supported.
(6) Information indicating whether transmission is performed from the base station to the UPF or to the AMF.
(7) Information indicating whether transmission is performed from the UPF to the AF or the NEF.
(8) Information indicating whether transmission is performed from the UPF to the AS (which may be the DN) or to the AF (which may be the NEF).
(9) Information indicating whether transmission is performed from the SMF to the UPF or to the AF (which may be the NEF).
(10) Information indicating whether transmission is performed from the UPF to the base station or to the SMF.
(11) Information as to whether or not device-NW data communication using the method disclosed herein is supported.
(12) Combination of (1) to (11).

The information may be included in a registration request message. The NW node that has received the registration request message can recognize that the registration request is for providing the information necessary for communication with the device.

The information may be included in a NAS message. For example, it may be included in an initial UE message to be transmitted. By using a NAS message, transmission can be performed from the UE to the AMF being a CN node.

The UE that has acquired the information necessary for communication with the device may retain the information. The base station that has acquired the information through the processing of providing the information necessary for communication with the device may retain the information. The AMF that has acquired the information through the processing of providing the information necessary for communication with the device may retain the information. The base station and the AMF may retain the information in correspondence with the UE. The UE and/or the base station and/or the AMF may retain the information even when the UE transitions to RM-DEREGISTRATION. In this manner, even when the UE is in RM-DEREGISTRATION, UE-device communication and device-NW communication via the UE can be performed.

The information necessary for communication with the device may be included in UE CONTEXT. Retention of the information necessary for communication with the device may be performed by retaining UE CONTEXT including the information.

In LTE, there are EPS Mobility Management (EMM) states instead of the RM states of the UE. The EMM states of the UE include EMM-REGISTERED and EMM-DEREGISTERED. The methods in RM disclosed in the above may be applied to the EMM states as appropriate. Similar effects can be achieved.

The CM states of the UE include CM-CONNECTED and CM-IDLE (NPL 10).

In CM-CONNECTED, the UE is capable of performing UE-device communication. In CM-CONNECTED, the UE may be capable of performing device-NW communication via the UE. In CM-CONNECTED of the UE, the device may be capable of performing communication with the CN via the UE and the RAN. In CM-CONNECTED, the UE may be capable of performing UE-device communication and/or device-NW communication via the UE in the UP and/or the CP. The communication may be data communication. The communication may be communication of information necessary for data communication. The UE may transmit data received from the device in UE-device communication to the NW. Alternatively, the UE may transmit data received from the NW to the device in UE-device communication.

A method of communicating device data in the CP will be disclosed. The device data may be included in a NAS message. For example, the device data may be included in an Uplink NAS transport message to be transmitted. By using a NAS message, device data transmission can be performed between the UE and the AMF being a CN node. As a device data communication method between the AMF and the AF or the AS for UE-device communication, the method disclosed regarding a case in which the UE is in RM-DEREGISTRED may be applied as appropriate. In this manner, the device data can be communicated in the CP.

The base station may directly perform device data communication with an NF for device data communication. The NF for device data communication may include a proxy function between the base station and the AF or the AS. A method in which the base station directly performs device data communication with the NF for device data communication to be disclosed later may be applied as appropriate. In this manner, CN nodes such as the AMF, the SMF, and the UPF can be omitted, and therefore device data communication can be performed at an early time and with ease.

In CM-IDLE, the UE is capable of performing only UE-device communication. In CM-IDLE, the UE may be incapable of performing device-NW communication via the UE. In CM-IDLE, the UE may be capable of performing UE-device communication in the UP and/or the CP. The communication may be data communication. The communication may be communication of information necessary for data communication.

In CM-IDLE, the UE may be capable of performing device-NW communication via the UE. A method for enabling the communication will be disclosed. For the communication, a NAS message may be used. The device data may be included in a NAS message. For example, the device data may be included in an initial UE message to be transmitted. By using a NAS message, device data transmission can be performed between the UE and the AMF being a CN node.

The service request processing may be used for communication of the device data. The device data may be included in the service request.

After device data communication, the UE need not transition to CM-CONNECTED. For example, in a case of the service request processing for device data communication, the UE need not transition to CM-CONNECTED. In this manner, In CM-IDLE, the UE can perform communication of the device data.

For device data communication, the UE may notify the NW of information on device data communication. As the information on device data communication, the information on UE-device communication disclosed in the above may be applied as appropriate.

The information may be included in a NAS message. The information may be included in the service request processing. The information may be transmitted together with the device data, or may be transmitted by using another message. The NW node that has received the NAS message including the information may be arranged not to perform CM-CONNECTED processing for the UE after device data communication. In CM-IDLE, the UE can perform communication of the device data.

A PDU session for device data communication need not be established. The SMF may configure in advance to which UPF the device data may be transmitted. The SMF may acquire information on the UPF from the PCF in advance. Setup processing may be performed between the SMF and the UPF used for device data transmission in advance. Even when a PDU session is not established for device data communication, the SMF can determine to which UPF transmission is to be performed when the SMF receives device data.

These configurations may be performed in the registration processing of the UE. The registration processing may be used instead of configuration in PDU session establishment processing using the service request processing of the UE. As another method, these configurations may be performed in the service request processing without the PDU session establishment processing. The need for PDU session establishment for device data communication can be eliminated.

The UE may perform PDU session establishment instead of the device. A PDU session identifier may be assigned for communication with the device. Separately from the PDU session identifier assigned to the UE for communication with the NW, a PDU session identifier may be assigned for communication with the device. When the UE performs the PDU session establishment processing instead of the device, the configuration may be performed by using signaling used for the processing.

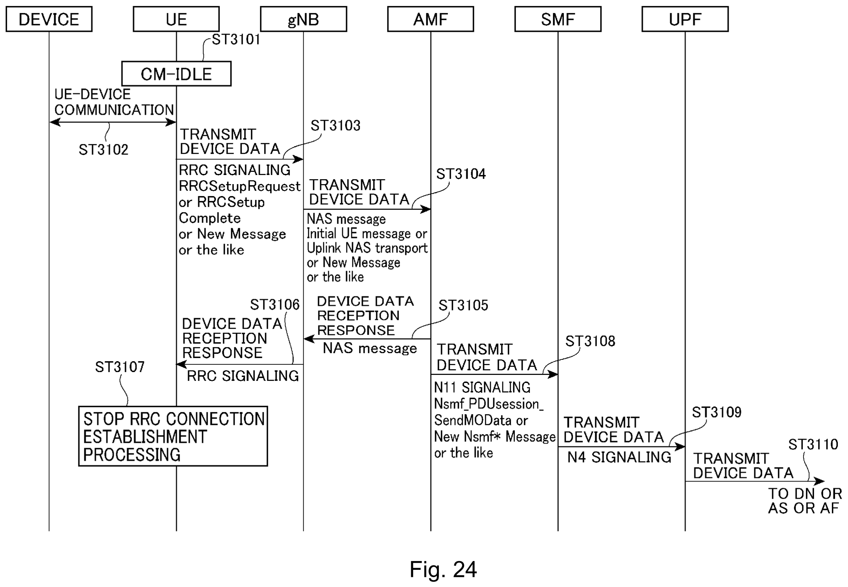

Fig. 24 is a diagram illustrating a sequence example in which the UE performs device-NW communication via the UE in CM-IDLE. It illustrates a case in which this is initiated by the UE. It illustrates a case in which transmission of device data is performed from the UE. In Step ST3101, the UE is in CM-IDLE state. In Step ST3102, communication is performed between the UE and the device. The UE receives device data. In Step ST3103, the UE transmits the device data to the base station. The UE may transmit the information on device data communication to the base station. For the transmission, RRC signaling may be used. For example, RRC connection establishment processing may be used. For example, it may be included in an RRCSetupRequest message to be transmitted. It may be included in an RRCSetupComplete message to be transmitted. Alternatively, a new RRC message may be provided for device data transmission. The information may be included in a NAS message to be transmitted by using RRC signaling.

The base station that has received the device data may determine whether or not to transmit the device data to the AMF by using the information on device data communication. For example, when it is for device-NW data communication, in Step ST3104, the base station transmits the device data to the AMF. The base station may transmit the information on device data communication to the AMF. For the transmission, a NAS message may be used. For example, it may be included in an initial UE message to be transmitted. It may be included in an Uplink NAS transport message to be transmitted. Alternatively, a new message may be provided for device data transmission.

In Step ST3105, the AMF that has received the device data transmits a device data reception response to the base station. For the transmission, a NAS message may be used. In Step ST3106, the base station transmits the device data reception response to the UE. For the transmission, RRC signaling may be used. The response may be included in a NAS message to be transmitted by using RRC signaling. In this manner, the UE can recognize that the device data has been transmitted to the AMF. A function of retransmitting the device data by the UE may be provided. When the UE receives the device data reception response, the UE does not retransmit the device data. When the UE does not receive the device data reception response, the UE retransmits the device data. When the UE receives the device data reception response, in Step ST3107, the UE may stop the RRC connection establishment processing. Alternatively, processing initiated to transmit the device data may be stopped. In this manner, after device data transmission, the UE can be restored to the state before transmission.

The AMF that has received the device data may determine whether or not to transmit the device data to the SMF by using the information on device data communication. For example, when it is for device-NW data communication, in Step ST3108, the AMF transmits the device data to the SMF. The AMF may transmit the information on device data communication to the SMF. For the transmission, N11 signaling may be used. For example, it may be included in an Nsmf_PDUsession_SendMOData message to be transmitted. Alternatively, a new message may be provided for device data transmission.

The SMF that has received the device data may determine whether or not to transmit the device data to the UPF by using the information on device data communication. For example, when it is for device-NW data communication, in Step ST3109, the SMF transmits the device data to the UPF. The SMF may transmit the information on device data communication to the UPF. For the transmission, N4 signaling may be used. A new message may be provided for device data transmission.

In Step ST3110, the UPF that has received the device data transmits the device data to the AF or the AS. The UPF that has received the device data may determine whether to transmit the device data to the AF or transmit the device data to the AS by using the information on device data communication. A new network function (NF) may be provided for device data communication. The UPF may transmit the device data to the AF via the NEF or the NF. The UPF may determine to which NF the device data is to be transmitted by using the information on device data communication. The UPF transmits the device data to the determined NF. The NEF or the NF may transmit the device data received from the UPF to the AF. The UPF may transmit the information on device data communication to the determined AF or AS.

The above has disclosed that the base station performs device data communication with the NF for device data communication via the AMF, the SMF, and the UPF. As another method, the base station may directly perform device data communication with the NF for device data communication. The NF for device data communication may include a proxy function between the base station and the AF or the AS. In this manner, CN nodes such as the AMF, the SMF, and the UPF can be omitted, and therefore device data communication can be performed at an early time and with ease.

Information as to whether or not the device data has ended may be provided. For example, the UE may generate the information. The UE may notify the CN node of the information as to whether or not the device data has ended. The UE may transmit the information to the base station, and the base station may transmit the information to the CN node. It may be transmitted together with the device data, or may be transmitted separately from the device data. In this manner, the CN node that has received the information can recognize that the device data transmitted from the UE has ended.

After the device data has been communicated, the UE does not transition to CM-CONNECTED. For example, the UE may determine not to transition to CM-CONNECTED upon transmission end of the device data. The UE maintains CM-IDLE after transmission end of the device data. For example, the UE may determine not to transition to CM-CONNECTED upon reception of the device data reception response of Step ST3106. The UE maintains CM-IDLE.

After the device data has been communicated, the CN node does not transition the state of the UE to CM-CONNECTED. For example, the CN node may determine not to transition the state of the UE to CM-CONNECTED upon transmission end of the device data. The CN node maintains the state of the UE after transmission end of the device data in CM-IDLE. For example, the CN node may determine not to transition the state of the UE to CM-CONNECTED upon transmission of the device data reception response of Step ST3105. The state of the UE is maintained in CM-IDLE.

Even when the service request processing is used for transmission of the device data, the UE and the CN node can maintain the state of the UE in CM-IDLE.

In this manner, in CM-IDLE, the UE can transmit the device data from the device to the AF or the AS via the UE itself.

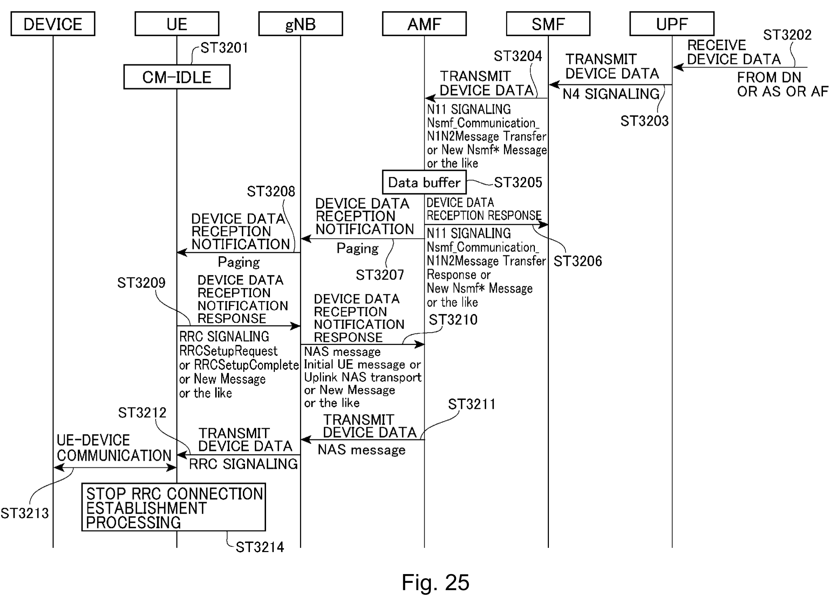

Fig. 25 is a diagram illustrating another sequence example in which the UE performs device-NW communication via the UE in CM-IDLE. It illustrates a case in which this is initiated by the CN node. It illustrates a case in which transmission of device data is performed from the CN node. In Step ST3201, the UE is in CM-IDLE state. In Step ST3202, the UPF receives device data from the AF or from the AS (which may be from the DN). When a new NF is provided for device data communication, the device data is received from the NF.

In Step ST3203, the UPF that has received the device data transmits the device data to the SMF. For the transmission, N4 signaling may be used. For example, a new message may be provided for device data transmission.

In Step ST3204, the SMF that has received the device data transmits the device data to the AMF. For the transmission, N11 signaling may be used. For example, it may be included in an Nsmf_Communication_N1N2Message Transfer message to be transmitted. Alternatively, a new message may be provided for device data transmission.

In Step ST3205, the AMF that has received the device data may buffer the device data.

In Step ST3206, the AMF that has received the device data may transmit a device data reception response to the SMF. For the transmission, N11 signaling may be used. For example, it may be included in an Nsmf_Communication_N1N2Message Transfer Response message to be transmitted. Alternatively, a new message may be provided for device data reception response transmission. The SMF can recognize that the device data has been transmitted to the AMF.

In Step ST3207, the AMF notifies the base station that the device data has been received. For example, paging may be used for the notification. Information indicating it is a device data reception notification may be provided. The information indicating it is a device data reception notification may include information for identifying the device, for example, a device identifier. The information may be included in the paging. The base station can recognize arrival of the device data.

When the base station directly performs device data communication with the NF for device data communication, the NF for device data communication may notify the base station that the device data has been received. In this manner, CN nodes such as the UPF, the SMF, and the AMF can be omitted, and therefore the base station can recognize arrival of the device data at an early time.

In Step ST3208, the base station notifies the UE that the CN node has received the device data. For example, paging may be used for the notification. For the device data reception notification, paging addressed to the UE may be used. The UE receives the paging addressed to the UE itself. Information indicating it is a device data reception notification may be provided. The information may be included in the paging. It may include information for identifying the device, for example, a device identifier. When the UE receives the paging addressed to the UE itself and acquires the information included in the paging, the UE can recognize arrival of the device data.

Another method will be disclosed. Paging for the device may be provided to device data reception notification. The UE receives the paging for the device. The information indicating it is a device data reception notification and the information for identifying the device may be included in the paging for the device. When the UE receives the paging for the device and acquires the information included in the paging, the UE can recognize arrival of the device data.

Another method will be disclosed. As the paging, paging addressed to the device with which the UE performs communication may be used. When the UE receives the paging addressed to the device with which communication is performed and acquires the information indicating it is a device data reception notification included in the paging, the UE can recognize arrival of the device data in the device. For example, this is effective when the UE recognizes the information for identifying the device with which communication is performed.

In Step ST3209, the UE in CM-IDLE transmits a device data reception notification response to the base station. For the transmission, RRC signaling may be used. For example, RRC connection establishment processing may be used. For example, it may be included in an RRCSetupRequest message to be transmitted. It may be included in an RRCSetupComplete message to be transmitted. Alternatively, a new RRC message may be provided for device data reception notification response transmission.

In Step ST3210, the base station that has received the device data reception notification response transmits the device data reception notification response to the AMF. For the transmission, a NAS message may be used. For example, it may be included in an initial UE message to be transmitted. It may be included in an Uplink NAS transport message to be transmitted. Alternatively, a new message may be provided for device data reception notification response transmission.

In Step ST3211, the AMF that has received the device data reception notification response transmits the device data to the base station. For the transmission, a NAS message may be used. In Step ST3212, the base station transmits the device data to the UE. For the transmission, RRC signaling may be used. In this manner, the UE can receive the device data. In Step ST3213, the UE that has received the device data performs UE-device communication, and transmits the device data to the device.

In Step ST3214, the UE that has transmitted the device data to the device may perform processing of stopping the RRC connection establishment processing. Alternatively, processing initiated to perform transmission of the device data reception notification response and reception of the device data may be stopped. In this manner, after device data reception, the UE can be restored to the state before transmission of the device data reception notification response and reception of the device data.

When the device data is continuously transmitted to or received from the NW after the UE has received the device data, the UE need not stop the RRC connection establishment processing.

Information as to whether or not the device data has ended may be provided. For example, the CN node may generate the information. The CN node may notify the UE of the information as to whether or not the device data has ended from the NW. The CN node may transmit the information to the base station, and the base station may transmit the information to the UE. It may be transmitted together with the device data, or may be transmitted separately from the device data. In this manner, the UE can recognize that the device data transmitted from the CN node has ended.

After the device data has been communicated, the UE does not transition to CM-CONNECTED. For example, the UE may determine not to transition to CM-CONNECTED upon reception end of the device data. The UE maintains CM-IDLE after reception end of the device data.

After the device data has been communicated, the CN node does not transition the state of the UE to CM-CONNECTED. For example, the CN node may determine not to transition the state of the UE to CM-CONNECTED upon transmission end of the device data. The CN node maintains the state of the UE in CM-IDLE after transmission end of the device data to the UE.

Even when the service request processing is used for transmission of the device data, the UE and the CN node can maintain the state of the UE in CM-IDLE.

In this manner, the UE can receive the device data from the AF or the AS in CM-IDLE, and can transmit the device data to the device.

In LTE, there are EPS Connection Management (ECM) states instead of the CM states of the UE. The ECM states of the UE include ECM-CONNECTED and ECM-IDLE. The methods in the CM states disclosed in the above may be applied to the ECM states as appropriate. Similar effects can be achieved.

The RRC states of the UE include RRC_CONNECTED, RRC_INACTIVE, and RRC_IDLE (NPL 2).

In RRC_CONNECTED, the UE is capable of performing UE-device communication. In RRC_CONNECTED, the UE may be capable of performing device-NW communication via the UE. In RRC_CONNECTED, the UE may be capable of performing UE-device communication and/or device-NW communication via the UE in the UP and/or the CP. The communication may be data communication. The communication may be communication of information necessary for data communication. The UE may transmit data received from the device in UE-device communication to the NW. Alternatively, the UE may transmit data received from the NW to the device in UE-device communication.

A method of communicating device data in the CP will be disclosed. The device data may be included in an RRC message. The device data may be included in RRC signaling to be transmitted. For example, the device data may be included in a ULInformationTransfer message, a DLInformationTransfer message, or an RRCReconfiguration message to be transmitted. In this manner, the device data can be communicated between the UE and the base station. As a device data communication method between the base station and the AF or the AS for UE-device communication, the method disclosed in the above may be applied as appropriate. A method according to the RM state or the CM state of the UE may be applied as appropriate. In this manner, the device data can be communicated in the CP.

In RRC_INACTIVE, the UE is capable of performing only UE-device communication. In RRC_INACTIVE, the UE may be incapable of performing device-NW communication via the UE. In RRC_INACTIVE, the UE may be capable of performing UE-device communication in the UP and/or the CP. The communication may be data communication. The communication may be communication of information necessary for data communication.

In RRC_INACTIVE, the UE may be capable of performing device-NW communication via the UE. A method for enabling the communication will be disclosed. For the communication, processing of transitioning from RRC_INACTIVE to RRC_CONNECTED may be used. For example, the device data may be included in an RRC message. For example, the device data may be included in an RRCResumeRequest message.

For the communication, RA processing may be used. For example, the device data may be included in Msg3. For example, the device data may be included in MsgA. The base station may include a PRACH configuration for the RA processing used for transmission of the device data in a SIB to be transmitted. The served UE can acquire the PRACH configuration. The base station may include the PRACH configuration for the RA processing used for transmission of the device data in an RRCRelease message with suspend to transmit the PRACH configuration to the UE. The RRCRelease message with suspend is used because the UE transitions to RRC_INACTIVE. The transmission by way of inclusion in the message allows the UE to use the PRACH configuration in RRC_INACTIVE. The UE may retain the PRACH configuration in RRC_INACTIVE.

For the communication, preconfigured resources may be used. For example, resources allocated by a configured grant (CG) may be used. The device data may be included in a PUSCH to be transmitted by using the resources allocated by the configured grant. The base station may include a configured grant configuration for the resources used for transmission of the device data in an RRCRelease message with suspend to transmit the configured grant configuration to the UE. The RRCRelease message with suspend is used because the UE transitions to RRC_INACTIVE. The transmission by way of inclusion in the message allows the UE to use the configured grant configuration in RRC_INACTIVE. The UE may retain the configured grant configuration in RRC_INACTIVE.

For device data communication, the UE may notify the NW of information on device data communication. As the information on device data communication, the information on UE-device communication disclosed in the above may be applied as appropriate.

For transmission of the information, an RRC message may be used. For transmission of the information, RA processing may be used. For transmission of the information, the resources allocated by the configured grant may be used. The information may be transmitted together with the device data, or may be transmitted by using another message or the like. The base station that has received the information may be arranged not to perform RRC_CONNECTED processing for the UE after device data communication. In RRC_INACTIVE, the UE can perform communication of the device data.

In this manner, in RRC_INACTIVE, the UE can perform communication between the device and the base station via the UE.

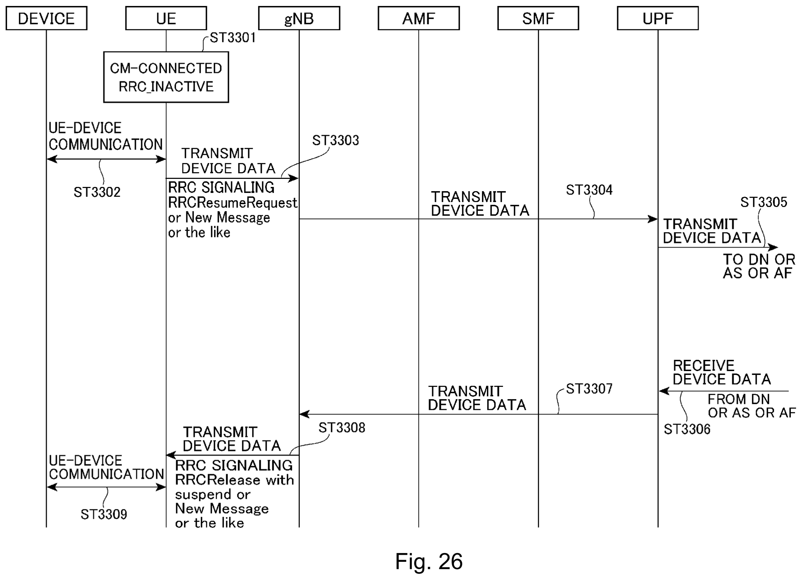

Fig. 26 is a diagram illustrating a sequence example in which the UE performs device-NW communication via the UE in RRC_INACTIVE. It discloses a method in which RRC signaling is used for device data communication between the UE and the base station. It illustrates a case in which the UE transmits the device data. In Step ST3301, the UE is in CM-CONNECTED and RRC_INACTIVE. In Step ST3302, communication is performed between the UE and the device. The UE receives device data. In Step ST3303, the UE transmits the device data to the base station. The UE may transmit the information on device data communication to the base station. For the transmission, RRC signaling may be used. For example, RRC resume processing may be used. For example, it may be included in an RRCResumeRequest message to be transmitted. Alternatively, a new RRC message may be provided for device data transmission.

The base station that has received the device data may determine whether or not to transmit the device data to the UPF by using the information on device data communication. For example, when the base station determines to transmit the device data via the UPF, in Step ST3304, the base station transmits the device data to the UPF.

In this manner, device-NW data communication can be performed without using the AMF or the SMF in the control plane.

In Step ST3305, the UPF that has received the device data transmits the device data to the AF or the AS. The UPF that has received the device data may determine whether to transmit the device data to the AF or transmit the device data to the AS by using the information on device data communication. A new network function (NF) may be provided for device data communication. The UPF may transmit the device data to the AF via the NEF or the NF. The UPF may determine to which NF the device data is to be transmitted by using the information on device data communication. The UPF transmits the device data to the determined NF. The UPF may transmit the information on device data communication to the determined NF. The NEF or the NF may transmit the device data received from the UPF to the AF. The UPF may transmit the information on device data communication to the determined AF or AS.

As another method, the base station may directly perform device data communication with the NF for device data communication. The NF for device data communication may include a proxy function between the base station and the AF or the AS. In this manner, the UPF can be omitted, and therefore device data communication can be performed at an early time and with ease.

Information as to whether or not the device data has ended may be provided. For example, the UE may generate the information. The UE may notify the NW of the information as to whether or not the device data has ended. The NW may be the base station, for example. The NW may be the UPF, for example. The UE may transmit the information to the base station, and the base station may transmit the information to the UPF. The UPF may transmit the information to the AS or the AF (which may be the NEF or the NF). It may be transmitted together with the device data, or may be transmitted separately from the device data. In this manner, the NW node that has received the information can recognize that the device data transmitted from the UE has ended.

In this manner, in RRC_INACTIVE, the UE can transmit the device data from the device to the AF or the AS via the UE itself.

A case will be described in which the device data is transmitted from the CN node. When there is device data from the CN node, in Step ST3306, the UPF receives the device data from the AF or from the AS (which may be from the DN). When a new NF is provided for device data communication, the device data is received from the NF. In Step ST3307, the UPF that has received the device data transmits the device data to the base station.

When the base station directly performs device data communication with the NF for device data communication, the NF for device data communication transmits the device data to the base station. The UPF can be omitted, and therefore the base station can receive the device data at an early time.

In Step ST3308, the base station that has received the device data transmits the device data to the UE. For the transmission, RRC signaling may be used. An RRCRelease message including stop information may be used. Alternatively, a new RRC message may be provided for device data transmission. By using the RRCRelease message including the stop information, the UE can continue RRC_INACTIVE.

In this manner, the UE can receive the device data. In Step ST3309, the UE that has received the device data performs UE-device communication, and transmits the device data to the device.

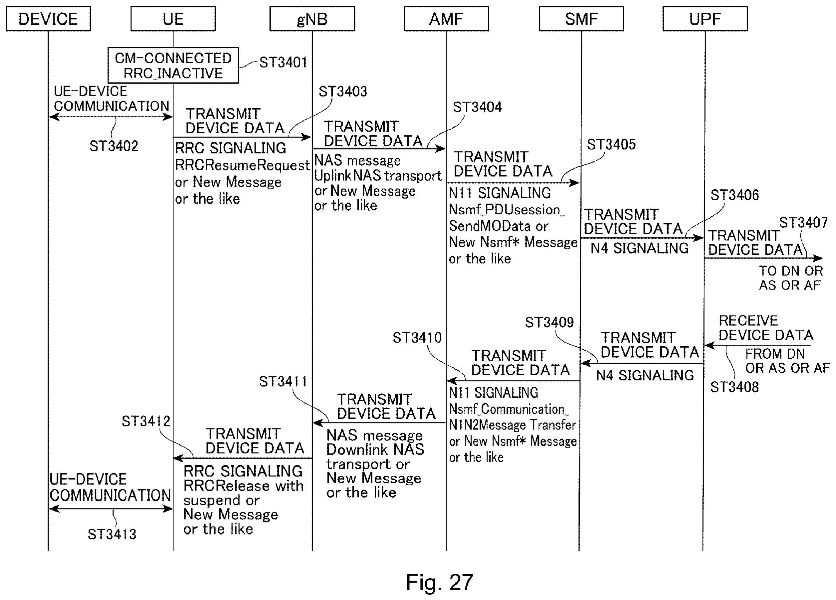

Fig. 27 is a diagram illustrating another sequence example in which the UE performs device-NW communication via the UE in RRC_INACTIVE. It illustrates a case in which communication is performed in the CP. It illustrates a case in which the UE transmits the device data. In Step ST3401, the UE is in CM-CONNECTED and RRC_INACTIVE. In Step ST3402, communication is performed between the UE and the device. The UE receives device data. In Step ST3403, the UE transmits the device data to the base station. The UE may transmit the information on device data communication to the base station. For the transmission, RRC signaling may be used. For example, RRC resume processing may be used. For example, it may be included in an RRCResumeRequest message to be transmitted. Alternatively, a new RRC message may be provided for device data transmission.

The base station that has received the device data may determine whether or not to transmit the device data to the AMF by using the information on device data communication. For example, when it is for device-NW data communication, in Step ST3404, the base station transmits the device data to the AMF. The base station may transmit the information on device data communication to the AMF. For the transmission, a NAS message may be used. For example, it may be included in an Uplink NAS transport message to be transmitted. Alternatively, a new message may be provided for device data transmission.

The AMF that has received the device data may determine whether or not to transmit the device data to the SMF by using the information on device data communication. For example, when it is for device-NW data communication, in Step ST3405, the AMF transmits the device data to the SMF. The AMF may transmit the information on device data communication to the SMF. For the transmission, N11 signaling may be used. For example, it may be included in an Nsmf_PDUsession_SendMOData message to be transmitted. Alternatively, a new message may be provided for device data transmission.

The SMF that has received the device data may determine whether or not to transmit the device data to the UPF by using the information on device data communication. For example, when it is for device-NW data communication, in Step ST3406, the SMF transmits the device data to the UPF. The SMF may transmit the information on device data communication to the UPF. For the transmission, N4 signaling may be used. A new message may be provided for device data transmission.

In this manner, device-NW data communication can be performed by using the AMF or the SMF in the control plane.

In Step ST3407, the UPF that has received the device data transmits the device data to the AF or the AS. The UPF that has received the device data may determine whether to transmit the device data to the AF or transmit the device data to the AS by using the information on device data communication. A new network function (NF) may be provided for device data communication. The UPF may transmit the device data to the AF via the NEF or the NF. The UPF may determine to which NF the device data is to be transmitted by using the information on device data communication. The UPF transmits the device data to the determined NF. The NEF or the NF may transmit the device data received from the UPF to the AF. The UPF may transmit the information on device data communication to the determined AF or AS.

As another method, the base station may directly perform device data communication with the NF for device data communication. The NF for device data communication may include a proxy function between the base station and the AF or the AS. In this manner, CN nodes such as the AMF, the SMF, and the UPF can be omitted, and therefore device data communication can be performed at an early time and with ease.

Information as to whether or not the device data has ended may be provided. For example, the UE may generate the information. The UE may notify the NW of the information as to whether or not the device data has ended. The NW may be the base station, for example. The NW may be the UPF, for example. The UE may transmit the information to the base station, and the base station may transmit the information to the UPF. The UPF may transmit the information to the AS or the AF (which may be the NEF or the NF). It may be transmitted together with the device data, or may be transmitted separately from the device data. In this manner, the NW node that has received the information can recognize that the device data transmitted from the UE has ended.

In this manner, in RRC_INACTIVE, the UE can transmit the device data from the device to the AF or the AS via the UE itself.

A case will be described in which the device data is transmitted from the CN node. When there is device data from the CN node, in Step ST3408, the UPF receives the device data from the AF or from the AS (which may be from the DN). When a new NF is provided for device data communication, the device data is received from the NF.

In Step ST3409, the UPF that has received the device data transmits the device data to the SMF. For the transmission, N4 signaling may be used. For example, a new message may be provided for device data transmission.

In Step ST3410, the SMF that has received the device data transmits the device data to the AMF. For the transmission, N11 signaling may be used. For example, it may be included in an Nsmf_Communication_N1N2Message Transfer message to be transmitted. Alternatively, a new message may be provided for device data transmission.

In Step ST3411, the AMF that has received the device data transmits the device data to the base station. For the transmission, a NAS message may be used. For example, it may be included in a Downlink NAS transport message to be transmitted. Alternatively, a new message may be provided for device data transmission.

When the base station directly performs device data communication with the NF for device data communication, the NF for device data communication transmits the device data to the base station. The UPF, the SMF, and the AMF can be omitted, and therefore the base station can receive the device data at an early time.

In Step ST3412, the base station that has received the device data transmits the device data to the UE. For the transmission, RRC signaling may be used. An RRCRelease message including stop information may be used. Alternatively, a new RRC message may be provided for device data transmission. By using the RRCRelease message including the stop information, the UE can continue RRC_INACTIVE.

In this manner, the UE can receive the device data. In Step ST3413, the UE that has received the device data performs UE-device communication, and transmits the device data to the device.

In RRC_IDLE, the UE is capable of performing only UE-device communication. In RRC_IDLE, the UE may be incapable of performing device-NW communication via the UE. In RRC_IDLE, the UE may be capable of performing UE-device communication in the UP and/or the CP. The communication may be data communication. The communication may be communication of information necessary for data communication.

In RRC_IDLE, the UE may be capable of performing device-NW communication via the UE. A method for enabling the communication will be disclosed. For the communication, processing of transitioning from RRC_IDLE to RRC_CONNECTED may be used. For example, the device data may be included in an RRC message. For example, the device data may be included in an RRCSetupRequest message.

For the communication, RA processing may be used. For example, the device data may be included in Msg3. For example, the device data may be included in MsgA. The base station may include a PRACH configuration for the RA processing used for transmission of the device data in a SIB to be transmitted. The served UE can acquire the PRACH configuration. The base station may include the PRACH configuration for the RA processing used for transmission of the device data in an RRCRelease message to transmit the PRACH configuration to the UE. The RRCRelease message is used because the UE transitions to RRC_IDLE. The transmission by way of inclusion in the message allows the UE to use the PRACH configuration in RRC_IDLE. The UE may retain the PRACH configuration in RRC_IDLE.

For the communication, preconfigured resources may be used. For example, resources allocated by a configured grant may be used. The device data may be included in a PUSCH to be transmitted by using the resources allocated by the configured grant. The base station may include a configured grant configuration for the resources used for transmission of the device data in an RRCRelease message to transmit the configured grant configuration to the UE. The RRCRelease message is used because the UE transitions to RRC_IDLE. The transmission by way of inclusion in the message allows the UE to use the configured grant configuration in RRC_IDLE. The UE may retain the configured grant configuration in RRC_IDLE.

For device data communication, the UE may notify the NW of information on device data communication. As the information on device data communication, the information on UE-device communication disclosed in the above may be applied as appropriate.

For transmission of the information, an RRC message may be used. For transmission of the information, RA processing may be used. For transmission of the information, the resources allocated by the configured grant may be used. The information may be transmitted together with the device data, or may be transmitted by using another message or the like. The base station that has received the information may be arranged not to perform RRC_CONNECTED processing for the UE after device data communication. In RRC_IDLE, the UE can perform communication of the device data.

In this manner, in RRC_IDLE, the UE can perform communication between the device and the base station via the UE. As a device data communication method between the base station and the AF or the AS for UE-device communication, the method disclosed regarding a case in which the UE is in RRC_INACTIVE may be applied as appropriate. In this manner, the device data can be communicated between the UE and the CN node.

The UE in RRC_INACTIVE or RRC_IDLE may transition to RRC_CONEECTED for communication of the device data between the UE and the NW. For example, a data radio bearer (DRB) for device data communication may be configured at the time of RRC connection establishment.

The UE in RRC_INACTIVE or RRC_IDLE may determine whether or not to transition to RRC_CONNECTED for communication of the device data between the UE and the NW. The determination may be performed by using QoS required for a service using UE-device communication, for example. For example, it may be determined by using delay time required for a service. For example, when the required delay time is smaller than a predetermined threshold, communication of the device data is performed with the NW by maintaining RRC_IDLE or RRC_INACTIVE. When the required delay time is equal to or larger than the predetermined threshold, communication of the device data is performed with the NW after transitioning to RRC_CONNECTED. In this manner, the device data requiring low delay can be communicated at an early time without transitioning to RRC_CONNECTED.

The determination as to whether or not to transition to RRC_CONNECTED may be performed by using the amount of device data between the UE and the device, for example. For example, when the amount of device data is larger than a predetermined threshold, device data communication is performed with the NW after transitioning to RRC_CONNECTED. When the amount of device data is equal to or smaller than the predetermined threshold, device data communication is performed with the NW by maintaining RRC_IDEL or RRC_INACTIVE. In this manner, a large amount of device data need not be included in RRC signaling to be communicated, and a signaling load can be reduced.

Regarding the UE in RRC_INACTIVE or RRC_IDLE, for communication of the device data between the UE and the NW, the UE may perform the determination as to whether or not to transition to RRC_CONNECTED. For example, the determination may be performed by taking account of a state of UE-device communication.

The threshold may be configured from the NW node to the UE. The NW node may be the base station. The UE may perform the determination as to whether or not to transition to RRC_CONNECTED for communication of the device data between the UE and the NW by using the threshold. In this manner, the NW node can control a state of a case in which the UE communicates the device data.

As disclosed in the present embodiment, by clarifying the state of the UE capable of communication with a device, the device can be introduced into the mobile communication system. In the mobile communication system, communication can be performed between the device and the UE and between the device and the NW via the UE. In the mobile communication system, communication with IoT devices having ultra-low power consumption can be performed.

### First Alteration of Fourth Embodiment

The following will disclose a management method performed by a network to allow the device to perform communication in the mobile communication system.

In the mobile communication system, states similar to those of the UE are provided to the device. The device may be managed by the CN node. Registration states of the device may be managed. They may be configured as the RM states of the device. Two RM states are provided to the device. A state of being registered with the NW and a state of being deregistered with the NW may be provided. The state of being registered may be referred to as RM-REGISTERED. The state of being deregistered may be referred to as RM-DEREGISTERED. In this manner, it can be handled in a manner similar to the RM states of the UE, and therefore control can be facilitated.

A registration method of the device will be disclosed. The device performs registration processing. The device may perform the registration processing with the CN node via the UE or the base station. The registration processing may include information on the device, for example, an identifier of the device, and information on a communication method (RAT) between the device and the UE or the base station. As the registration processing of the device, the registration processing of the UE may be applied as appropriate.

Another method will be disclosed. The UE performs the registration processing of the device. A registration request from the UE to the CN node may include information indicating that it is a registration request of the device. It may include information on the device, for example, an identifier of the device, and information on a communication method (RAT) between the device and the UE or the base station. In this manner, the CN node that has received the registration request of the device from the UE can recognize that it is the registration processing of the device.

In the registration processing of the device, the base station may notify the CN node of information on the base station itself. For example, an identifier of the base station itself may be notified. In this manner, the CN node can recognize via which base station the device can perform communication. The CN node managing the device may store in advance an association between the device, the UE, and the base station or between the device and the base station. In communication processing with the device, the CN node can determine the UE or the base station capable of communication with the device.

The CN node may acquire information on a location of the device. For example, the information may be acquired from the UE or the base station performing communication with the device. The CN node managing the device may acquire the information on the location of the device. The CN node managing the device may store in advance the information on the location of the device together with the association between the device, the UE, and the base station or between the device and the base station. In communication processing with the device, for example, the CN node may determine the UE or the base station capable of communication by using the location of the device.

The CN node may request a notification of the location information of the device from the UE or the base station. The UE or the base station that has received the request for notification of the location information of the device from the CN node may acquire the location information of the device. The UE or the base station may transmit the acquired location information of the device to the CN node. In this manner, the CN node can manage the location information of the device.

Connected states of the device with the CN node may be managed. They may be managed as the CM states of the device. Two CM states are provided to the device. A state of being connected to the CN node and a state of being disconnected from the CN node may be provided. The state of being connected to the CN node may be referred to as CM-CONNECTED. The state of being disconnected from the CN node may be referred to as CM-IDLE. The CN node may be the AMF. In this manner, it can be handled in a manner similar to the CM states of the UE, and therefore control can be facilitated.

A connection method of the device with the CN node will be disclosed. The device performs connection processing with the CN node. The device may perform the connection processing with the CN node via the UE or the base station. The connection processing may include information on the device, for example, an identifier of the device, and information on a communication method (RAT) between the device and the UE or the base station. As the connection processing of the device, the connection processing of the UE may be applied as appropriate. For example, the service request processing may be applied as appropriate. For example, the PDU session establishment processing may be applied as appropriate.

Another method will be disclosed. The UE performs the connection processing of the device with the CN node. A connection request from the UE to the CN node may include information indicating that it is a connection request of the device with the CN node. It may include information on the device, for example, an identifier of the device, and information on a communication method (RAT) between the device and the UE or the base station. The CN node may be the AMF. There may be one or a plurality of devices for which the UE performs the connection processing with the CN node. For example, the UE may perform the connection processing of one or a plurality of devices capable of communication with the CN node. In this manner, the CN node that has received the connection request of the device with the CN node from the UE can recognize that it is a connection request from the device.

In the connection processing of the device with the CN node, the base station may notify the CN node of information on the base station itself. For example, an identifier of the base station itself may be notified. In this manner, the CN node can recognize via which base station the device can perform communication. The CN node managing the device may store in advance an association between the device, the UE, and the base station or between the device and the base station. In communication processing with the device, the CN node can determine the UE or the base station capable of communication with the device.

The CN node may acquire information on a location of the device. For example, the information may be acquired from the UE or the base station performing communication with the device. The CN node managing the device may acquire the information on the location of the device. The CN node managing the device may store in advance the information on the location of the device together with the association between the device, the UE, and the base station or between the device and the base station. In communication processing with the device, for example, the CN node may determine the UE or the base station capable of communication by using the location of the device.

Connected states of the device with the base station may be managed. They may be managed as the RRC states of the device. Three RRC states are provided to the device. A state of being connected to the base station, a state of Inactive connection with the base station, and a state of being disconnected from the base station may be provided. The state of being connected to the base station may be referred to as RRC_CONNECTED. The state of Inactive connection with the base station may be referred to as RRC_INACTIVE. The state of being disconnected from the base station may be referred to as RRC_IDLE. In this manner, it can be handled in a manner similar to the RRC states of the UE, and therefore control can be facilitated.

A connection method of the device with the base station will be disclosed. The device performs connection processing with the base station. The device may perform the connection processing with the base station via the UE or with the base station directly. The connection processing may include information on the device, for example, an identifier of the device, and information on a communication method (RAT) between the device and the UE or the base station. As the connection processing, RRC connection processing may be used. As the connection processing of the device, the connection processing of the UE may be applied as appropriate. For example, RRC establishment processing may be applied as appropriate. For example, the device may perform an RRC setup request for the base station.

Another method will be disclosed. The UE performs the connection processing of the device with the base station. A connection request from the UE to the base station may include information indicating that it is a connection request of the device with the base station. It may include information on the device, for example, an identifier of the device, and information on a communication method (RAT) between the device and the UE or the base station. In this manner, the base station that has received the connection request from the UE can recognize that it is a connection request from the device.

The base station may acquire information on a location of the device. For example, the information may be acquired from the UE performing communication with the device. In the communication processing with the device, for example, the base station may determine the UE capable of communication by using the location of the device. The base station may transmit the information on the location of the device to the CN node managing the device. The CN node managing the device may store in advance the information on the location of the device together with the association between the device, the UE, and the base station or between the device and the base station. In communication processing with the device, for example, the CN node may determine the UE or the base station capable of communication by using the location of the device.

In this manner, in the mobile communication system, management performed by the NW to allow the device to perform communication is facilitated. In the mobile communication system, communication with IoT devices having ultra-low power consumption can be performed.

One or a plurality of cells are configured for one gNB. In the present disclosure, although there is a description of the gNB or the cell, it may be the gNB or may be the cell, unless otherwise specifically noted.

In the present disclosure, the gNB may be the MCG or the SCG.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

For example, the methods disclosed in the embodiments and their alterations described above may be applied to communication between a UE and a UE or a UE and a NW via relay using SL communication.

For example, the methods disclosed in the embodiments and their alterations described above may be applied not only to a vehicle-to-everything (V2X) service but also to services using SL communication. For example, they may be applied to SL communication used in various services, such as a proximity-based service, public safety, inter-wearable terminal communication, and inter-device communication in a factory.

Various aspects of the present disclosure are summarized below as supplementary notes.

### (Supplementary Note 1)

A communication system comprising:
a base station supporting a fifth generation radio access system;
a communication terminal configured to connect to the base station; and
a device configured to connect to the base station or the communication terminal, wherein
first communication and second communication coexist in the communication system by using at least one of frequency division multiplexing and time division multiplexing, the first communication being communication between the device and the base station or communication between the device and the communication terminal, and the second communication being communication between the communication terminal and the base station and communication between the communication terminal and another communication terminal.

### (Supplementary Note 2)

The communication system according to Supplementary Note 1, wherein
in a case where the device and the communication terminal communicate with each other,
the base station is configured to configure a gap for communication for the device and the communication terminal to communicate, and
the communication terminal and the device are configured to communicate with each other in the gap for the communication configured by the base station in advance.

### (Supplementary Note 3)

The communication system according to Supplementary Note 1 or 2, wherein
the base station is configured to configure a gap for measurement, the gap for the measurement being used for the communication terminal to measure communication quality with the device and detect the device capable of communication, and
the communication terminal is configured to detect the device capable of communication in the gap for the measurement configured by the base station in advance.

### (Supplementary Note 4)

The communication system according to any one of Supplementary Notes 1 to 3, wherein
in a case where a registration state of the communication terminal and the device is RM-REGISTERED, the communication between the communication terminal and the device is enabled.

### (Supplementary Note 5)

The communication system according to any one of Supplementary Notes 1 to 4, wherein
in a case where a connected state of the communication terminal and the device with a core network node is CM-CONNECTED, the communication between the communication terminal and the device is enabled.

### (Supplementary Note 6)

The communication system according to any one of Supplementary Notes 1 to 5, wherein
in a case where a connected state of the communication terminal and the device with a core network node is CM-IDLE, communication between the device and a core network via the communication terminal is enabled.

### (Supplementary Note 7)

The communication system according to any one of Supplementary Notes 1 to 6, wherein
in a case where a state of the communication terminal and the device with the base station is RRC_CONNECTED, RRC_INACTIVE, or RRC_IDLE, the communication between the communication terminal and the device is enabled.

### Reference Signs List

- 202: Communication Terminal Apparatus (Mobile Terminal)
- 210: Communication System
- 213, 240-1, 240-2, 750: Base Station Apparatus (NR Base Station, Base Station)
- 214: 5G Core Unit
- 215: Central Unit
- 216: Distributed Unit
- 217: Control-Plane Central Unit
- 218: User-Plane Central Unit
- 219: TRP
- 301, 403: Protocol Processing Unit
- 302: Application Unit
- 304, 405: Encoder Unit
- 305, 406: Modulating Unit
- 306, 407: Frequency Converting Unit
- 307-1 to 307-4, 408-1 to 408-4: Antenna
- 308, 409: Demodulating Unit
- 309, 410: Decoder Unit
- 310, 411, 526: Control Unit
- 401: EPC Communication Unit
- 402: Other Base Station Communication Unit
- 412: 5GC Communication Unit
- 521: Data Network Communication Unit
- 522: Base Station Communication Unit
- 523: User Plane Communication Unit
- 523-1: PDU Processing Unit
- 523-2: Mobility Anchoring Unit
- 525: Control Plane Control Unit
- 525-1: NAS Security Unit
- 525-2: Idle State Mobility Management Unit
- 527: Session Management Unit
- 527-1: PDU Session Control Unit
- 527-2: UE IP Address Assigning Unit
- 751-1 to 751-8: Beam
- 752: Cell

## Claims

1. A communication system comprising:
a base station supporting a fifth generation radio access system;
a communication terminal configured to connect to the base station; and
a device configured to connect to the base station or the communication terminal, wherein
first communication and second communication coexist in the communication system by using at least one of frequency division multiplexing and time division multiplexing, the first communication being communication between the device and the base station or communication between the device and the communication terminal, and the second communication being communication between the communication terminal and the base station and communication between the communication terminal and another communication terminal.

2. The communication system according to claim 1, wherein
in a case where the device and the communication terminal communicate with each other,
the base station is configured to configure a gap for communication for the device and the communication terminal to communicate, and
the communication terminal and the device are configured to communicate with each other in the gap for the communication configured by the base station in advance.

3. The communication system according to claim 1 or 2, wherein
the base station is configured to configure a gap for measurement, the gap for the measurement being used for the communication terminal to measure communication quality with the device and detect the device capable of communication, and
the communication terminal is configured to detect the device capable of communication in the gap for the measurement configured by the base station in advance.

4. The communication system according to any one of claims 1 to 3, wherein
in a case where a registration state of the communication terminal and the device is RM-REGISTERED, the communication between the communication terminal and the device is enabled.

5. The communication system according to any one of claims 1 to 4, wherein
in a case where a connected state of the communication terminal and the device with a core network node is CM-CONNECTED, the communication between the communication terminal and the device is enabled.

6. The communication system according to any one of claims 1 to 5, wherein
in a case where a connected state of the communication terminal and the device with a core network node is CM-IDLE, communication between the device and a core network via the communication terminal is enabled.

7. The communication system according to any one of claims 1 to 6, wherein
in a case where a state of the communication terminal and the device with the base station is RRC_CONNECTED, RRC_INACTIVE, or RRC_IDLE, the communication between the communication terminal and the device is enabled.
